# EUROPEAN PATENT APPLICATION

(11) **EP 4 842 075 A1**
(43) Date of publication of application: **18.11.2026**
(21) Application number: 24915898.1
(22) Date of filing: 08.01.2024
(51) Int. Cl.: H04W 52/02

(54) **COMMUNICATION METHOD**

(71) Applicant: Shenzhen TCL New Technology Co., Ltd., Shenzhen, Guangdong 518000 (CN)
(72) Inventor: HUANG, Wenwen, Shenzhen, Guangdong 518000 (CN); ZHANG, Yincheng, Shenzhen, Guangdong 518000 (CN)
(74) Representative: Herrero & Asociados, S.L.
(86) International application number: PCT/CN2024/071159
(87) International publication number: WO 2025/147816

(57) **Abstract**

A communication method is executed by a user equipment comprising a first receiver and a second receiver, and comprises : receiving first information, wherein the first information comprises a first parameter for cell discontinuous transmission (cell DTX) and a second parameter for low-power wake-up signal (LP-WUS), the first parameter comprising a cell DTX period; on the basis of the second parameter, determining a monitoring occasion of the LP-WUS; and on the basis of the first parameter and the monitoring occasion, determining a monitoring behavior of the LP-WUS, wherein the LP-WUS is at least used for indicating a behavior of monitoring a physical downlink control channel (PDCCH), the LP-WUS can be received by means of the second receiver, and the first information is received by means of the first receiver.

## Description

### TECHNICAL FIELD

The present application relates to the field of wireless communications, and more specifically, to a communication method.

### BACKGROUND

With the development of wireless communication systems, base stations and user equipment support technologies such as large bandwidth and multiple antennas, and the power consumption of base stations and user equipment also increases accordingly. Reducing the power consumption of base stations and reducing the power consumption of user equipment have always been important research directions in communication systems.

### SUMMARY

In view of this, an aspect of an embodiment of the present application provides a communication method, performed by a user equipment (UE) comprising a first receiver and a second receiver, the method comprising: receiving first information, wherein the first information comprises a first parameter of Cell Discontinuous Transmission (Cell DTX) and a second parameter of Low-Power Wake-Up Signal (LP-WUS), the first parameter comprises a Cell DTX cycle, and the first information is received via the first receiver; determining a monitoring occasion of the LP-WUS according to the second parameter; and determining a monitoring behavior for the LP-WUS according to the first parameter and the monitoring occasion, wherein the LP-WUS is at least used for indicating a behavior of monitoring a Physical Downlink Control Channel (PDCCH). Therefore, the UE and a base station can determine the monitoring behavior for the LP-WUS according to the parameter of the Cell DTX and/or a parameter of a Connected mode Discontinuous Reception (C-DRX), and the monitoring occasion of the LP-WUS, ensuring that the behavior on the UE side and the behavior on the base station side are consistent, thereby enabling normal communication between the base station and the UE.

Another aspect of an embodiment of the present application provides a communication method, performed by a UE, the method comprising: receiving first information, wherein the first information comprises a first parameter of Cell DTX and/or a parameter of C-DRX, and the first information further comprises a length of one or more first timers; when a condition is met, starting or restarting the first timer, wherein the first timer is used for activating or deactivating an LP-WUS; and determining a behavior or the length of the first timer according to a state of the Cell DTX and/or a state of the C-DRX. Therefore, frequent switching of the UE between the first receiver and the second receiver can be avoided, which would otherwise cause additional delay in data transmission.

Another aspect of an embodiment of the present application provides a communication method, performed by a UE, the communication method comprising: receiving first information, wherein the first information comprises a parameter of an LP-WUS, and the parameter of the LP-WUS comprises a time-domain position and/or a frequency-domain position of the LP-WUS; and receiving the LP-WUS according to the parameter of the LP-WUS, wherein the LP-WUS carries different functions using one or more of a Time Division Multiplexing (TDM) mode, a Frequency Division Multiplexing (FDM) mode, and a Code Division Multiplexing (CDM) mode. Therefore, the LP-WUS with a limited number of bits can carry more functions.

Another aspect of an embodiment of the present application provides a communication method, performed by a base station, the method comprising: transmitting first information, wherein the first information comprises a first parameter of Cell DTX and a second parameter of an LP-WUS, the first parameter comprises a Cell DTX cycle, and the second parameter is used for determining a monitoring occasion of the LP-WUS; and determining a behavior of a UE monitoring the LP-WUS according to the first parameter and the monitoring occasion of the LP-WUS, wherein the LP-WUS is at least used for indicating a behavior of monitoring a PDCCH. Therefore, signals sent by the base station during an inactive time of the Cell DTX can be reduced, thereby saving power consumption of the base station. Meanwhile, the UE and the base station determine the monitoring behavior for the LP-WUS according to the parameter of the Cell DTX and/or the parameter of the C-DRX, and the monitoring occasion of the LP-WUS, ensuring that the behavior on the UE side and the behavior on the base station side are consistent, thereby enabling normal communication between the base station and the UE.

Another aspect of an embodiment of the present application provides a communication method, performed by a base station, the method comprising: transmitting first information, wherein the first information comprises a first parameter of Cell DTX and/or a parameter of C-DRX, and the first information further comprises a length of one or more first timers, wherein when a condition is met, starting or restarting the first timer, and the first timer is used for activating or deactivating an LP-WUS; and determining a behavior or the length of the first timer according to a state of the Cell DTX and/or a state of the C-DRX. Therefore, frequent switching of the UE between the first receiver and the second receiver can be avoided, which would otherwise cause additional delay in data transmission.

Another aspect of an embodiment of the present application provides a communication method, performed by a base station, the communication method comprising: transmitting first information, wherein the first information comprises a parameter of an LP-WUS, and the parameter of the LP-WUS comprises a time-domain position and/or a frequency-domain position of a monitoring occasion of the LP-WUS; and transmitting the LP-WUS, wherein the LP-WUS carries different functions using one or more of a TDM mode, an FDM mode, and a CDM mode. Therefore, the LP-WUS with a limited number of bits can carry more functions.

Another aspect of an embodiment of the present application provides a user equipment, comprising: a processor and a memory, wherein the memory is configured to store a computer program, and the processor is configured to call and run the computer program stored in the memory to perform the methods as described above.

Another aspect of an embodiment of the present application provides a base station, comprising: a processor and a memory, wherein the memory is configured to store a computer program, and the processor is configured to call and run the computer program stored in the memory to perform the methods as described above.

Another aspect of an embodiment of the present application provides a chip, the chip comprising: a processor, configured to call and run a computer program from a memory to cause a device in which the chip is installed to perform the methods as described above.

Another aspect of an embodiment of the present application provides a non-transitory computer-readable storage medium, storing a computer program that, when executed by a computer, causes the computer to perform the methods as described above.

### BRIEF DESCRIPTION OF THE DRAWINGS

FIG. 1 is a schematic diagram of a network architecture of a communication system according to an embodiment of the present application.
FIG. 2 is a schematic diagram of Connected mode Discontinuous Reception (C-DRX) according to an embodiment of the present application.
FIG. 3 is a schematic diagram of Cell Discontinuous Transmission (Cell DTX) according to an embodiment of the present application.
FIG. 4 is a schematic diagram of monitoring a Physical Downlink Control Channel (PDCCH) under Cell DTX mechanism and C-DRX mechanism.
FIG. 5 is a schematic diagram of monitoring occasions of Low-Power Wake-Up Signal (LP-WUS) in a continuous monitoring mode and a periodic monitoring mode.
FIG. 6 is a schematic flowchart of a communication method provided by an embodiment of the present application.
FIG. 7 is a schematic diagram of monitoring occasions of Cell DTX and an LP-WUS in a continuous monitoring mode according to an embodiment of the present application.
FIG. 8 is a schematic diagram of monitoring occasions of Cell DTX and an LP-WUS in a continuous monitoring mode according to an embodiment of the present application.
FIG. 9 is a schematic diagram of monitoring occasions of Cell DTX and an LP-WUS in a periodic monitoring mode according to an embodiment of the present application.
FIG. 10 is a schematic diagram of monitoring occasions of Cell DTX and an LP-WUS in a continuous monitoring mode according to an embodiment of the present application.
FIG. 11 is a schematic diagram of monitoring occasions of Cell DTX and an LP-WUS in a periodic monitoring mode according to an embodiment of the present application.
FIG. 12 is a schematic diagram of monitoring occasions of Cell DTX, C-DRX, and an LP-WUS in a continuous monitoring mode according to an embodiment of the present application.
FIG. 13 is a schematic diagram of monitoring occasions of Cell DTX, C-DRX, and an LP-WUS in a continuous monitoring mode according to an embodiment of the present application.
FIG. 14 is a schematic diagram of monitoring occasions of Cell DTX, C-DRX, and an LP-WUS in a periodic monitoring mode according to an embodiment of the present application.
FIG. 15 is a schematic diagram of monitoring occasions of Cell DTX, C-DRX, and an LP-WUS in a periodic monitoring mode according to an embodiment of the present application.
FIG. 16 is a schematic diagram of monitoring occasions of Cell DTX, C-DRX, and an LP-WUS in a periodic monitoring mode according to an embodiment of the present application.
FIG. 17 is a schematic flowchart of a communication method provided by an embodiment of the present application.
FIG. 18 is a schematic diagram of monitoring occasions of Cell DTX and an LP-WUS according to an embodiment of the present application.
FIG. 19 is a schematic flowchart of a communication method provided by an embodiment of the present application.
FIG. 20 is a schematic diagram of an LP-WUS according to an embodiment of the present application.
FIG. 21 is a schematic diagram of an LP-WUS according to an embodiment of the present application.
FIG. 22 is a schematic diagram of an LP-WUS according to an embodiment of the present application.
FIG. 23 is a block diagram of an example system for wireless communication according to an embodiment of the present application.

### DETAILED DESCRIPTION

The technical solutions in the embodiments of the present application will be described below with reference to the accompanying drawings in the embodiments of the present application. Apparently, the described embodiments are part of the embodiments of the present application, rather than all of the embodiments. Based on the embodiments in the present application, all other embodiments obtained by a person of ordinary skill in the art without making creative efforts shall fall within the protection scope of the present application. In the embodiments of the present application, "defined as", "set as" or "configured as" may be implemented by pre-storing corresponding codes, tables or other information that can be used to indicate related information in a device (e.g., including an AP and a base station), and the specific implementation manner is not limited in the present application. For example, "defined/predefined" may refer to being defined in a protocol. Unless otherwise specified, "plurality" refers to two or more than two. In addition, "/" indicates that the associated objects have an "or" relationship. For example, A/B may represent A or B. The term "and/or" in the present application merely describes an association relationship between associated objects and indicates that three relationships may exist. For example, A and/or B may indicate three cases: A alone, A and B together, and B alone, where A and B may be singular or plural. The terms "first", "second", etc. in the description of the present application are used to distinguish different objects, rather than to describe a specific order. Without departing from the teaching of one or more embodiments, a first element/value discussed below may be referred to as a second element/value. An element being described as a "first" element may not require or imply the existence of a second element/value or other element/value.

In the present application, words such as "exemplary" or "for example" are used to indicate an example, illustration or explanation. Any embodiment or design solution described as "exemplary" or "for example" in the present application should not be construed as being more preferred or advantageous than other embodiments or design solutions. Rather, the use of the words "exemplary" or "for example" is intended to present related concepts in a concrete manner.

It should be understood that reference to "an embodiment" throughout the specification means that a particular feature, structure or characteristic related to the embodiment is included in at least one embodiment of the present application. Therefore, the embodiments throughout the specification do not necessarily refer to the same embodiment. Furthermore, these particular features, structures or characteristics may be combined in any suitable manner in one or more embodiments.

The technical solutions of the embodiments of the present application can be applied to various communication systems, for example: Wireless Local Area Networks (WLAN), Wireless Fidelity (Wi-Fi), or other communication systems.

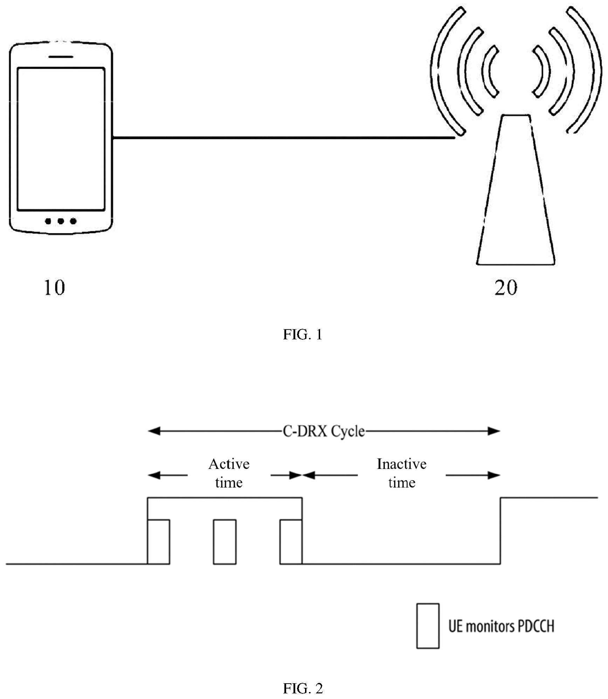

FIG. 1 is a schematic diagram of a network architecture of a communication system. The communication system may include one or more User Equipments (UEs) 10 (only one UE is shown in FIG. 1) and one or more base stations (BSs) 20 (only one BS is shown in FIG. 1). FIG. 1 is only a schematic diagram and does not limit the applicable scenarios of the technical solutions provided by the embodiments of the present application. The UE 10 is wirelessly connected to the base station 20. It should be noted that FIG. 1 is only illustrative, and the embodiments of the present application do not limit the numbers of base stations 20 and UEs 10 included in the communication system. In some embodiments, the communication system may further include other devices, such as wireless relay devices, wireless backhaul devices, or a core network.

A UE includes a device that provides voice and/or data connectivity to a user, and may include, for example, a handheld device with wireless connectivity, or a processing device connected to a wireless modem. A UE may communicate with a core network via a base station. The UE may include a wireless UE, a mobile UE, a Device-to-Device (D2D) UE, a Vehicle-to-Everything (V2X) UE, a Machine-to-Machine/Machine-Type Communications (M2M/MTC) UE, an Internet of Things (IoT) UE, a subscriber unit, a subscriber station, a mobile station, a remote station, an Access Point (AP), a remote UE, an access UE, a user UE, a user agent, or a terminal, etc. The UE may include various UE devices, such as a mobile telephone (or referred to as a "cellular" telephone), a computer with mobile UE capabilities, a portable, pocket-sized, handheld, computer-embedded mobile device, and the like. For example, Personal Communication Service (PCS) telephones, cordless telephones, Session Initiation Protocol (SIP) telephones, Wireless Local Loop (WLL) stations, Personal Digital Assistants (PDAs), constrained devices (e.g., devices with lower power consumption, or devices with limited storage capability or limited computing capability), etc., which are not limited herein.

It should be noted that the UE involved in the embodiments of the present application may include a main receiver (MR) and an auxiliary receiver. Compared with the main receiver, the power consumption of the auxiliary receiver for processing signals is very low. The auxiliary receiver may also be referred to as a Low Power-Wake Up Receiver (LP-WUR), denoted as LR. In the existing New Radio (NR) system, signals such as a Synchronization Signal Block (SSB), a Physical Downlink Control Channel (PDCCH), a Physical Downlink Shared Channel (PDSCH), a Physical Uplink Shared Channel (PUSCH), a Physical Uplink Control Channel (PUCCH), a Channel State Information Reference Signal (CSI-RS), and a Sounding Reference Signal (SRS) are generally considered to be processed by the MR. The existing system has high requirements for time/frequency synchronization accuracy, as well as features such as large bandwidth and high throughput. Therefore, the receiver requires high-precision modules, which bring more power consumption, for example, a high-precision radio frequency low noise amplifier, a high-precision local oscillator, and a high-sampling-rate analog/digital converter. The architecture of the LR may be different from that of the MR. The LR has lower requirements for time/frequency synchronization accuracy, small bandwidth, and low data rate. Therefore, low-precision modules may be used, or some modules may be directly omitted to reduce power consumption. Some modules of the LR may be shared with some modules of the MR, and some or all modules of the LR may also be independent of the modules of the MR. The receiver architecture of the LR may employ radio frequency envelope detection, intermediate frequency envelope detection, or baseband envelope detection, etc. The LR is mainly used to receive a wake-up signal, which may be referred to as a Low Power-Wake Up Signal (LP-WUS). The LP-WUS is different from the wake-up signal on the main receiver in the prior art. In the prior art, the wake-up signal on the main receiver is carried by a PDCCH. Therefore, the wake-up signal on the main receiver may also be referred to as a PDCCH-based WUS, and the UE needs to perform channel estimation, demodulation, decoding and other operations to obtain the information carried by the PDCCH. The LP-WUS and the PDCCH-based WUS are two different signals. The power consumption required for the UE to monitor the LP-WUS is much lower than that required for monitoring the PDCCH-based WUS. The LR may also receive a synchronization signal, by which the UE can obtain coarse synchronization. This synchronization signal may be referred to as a Low Power-Synchronization Signal (LP-SS). In order to save power consumption of the UE, when there is no data transmission, the UE may receive the LP-SS and/or the LP-WUS via the LR, while the MR of the UE may be in a sleep state, so that the UE may only turn on modules required by the LR and turn off modules of the MR. When there is data transmission, the UE may wake up the MR according to the received LP-WUS, turn on the modules of the MR, and perform transmission with the base station via the MR, thereby ensuring throughput.

A base station is an access device through which a UE wirelessly accesses the mobile communication system. The base station may be a Radio Access Network (RAN). The RAN may include a Generation Node B (gNB) in a 5G communication system, an evolved Node B (eNB), a Next Generation eNB (ng-eNB), a wireless backhaul device, a Radio Network Controller (RNC), a Node B (NB), a Base Station Controller (BSC), a Base Transceiver Station (BTS), a Home evolved NodeB (HeNB) or Home Node B (HNB), a BaseBand Unit (BBU), a Transmitting and Receiving Point (TRP), a Transmitting Point (TP), a mobile switching center, etc., which are not limited herein.

In the embodiments of the present application, the apparatus for implementing the RAN function may be the RAN itself, or may be an apparatus capable of supporting the RAN to implement the function, such as a chip system or a combination of components or parts that can implement the base station function, and the apparatus may be installed in the RAN. In the embodiments of the present application, a chip system may be composed of chips, or may include chips and other discrete devices.

Related technical features involved in the embodiments of the present application are explained below. It should be noted that these explanations are intended to facilitate understanding of the embodiments of the present application and should not be construed as limiting the protection scope claimed by the present application.

### I. C-DRX (Connected-Discontinuous Reception)

In an RRC connected mode, a C-DRX mechanism is proposed. The C-DRX mechanism enables a UE to sleep in some time periods and not monitor a PDCCH, thereby saving power consumption of the UE.

A base station configures C-DRX parameters for the UE. The C-DRX parameters include a C-DRX cycle (referred to as a DRX cycle). A time period corresponding to one C-DRX cycle may include an active time of the C-DRX and an inactive time of the C-DRX. During the active time, the UE needs to monitor the PDCCH; during the inactive time, the UE may not monitor the PDCCH to reduce power consumption, as shown in FIG. 2.

The active time of C-DRX includes a running period of an on-duration timer (drx onDurationTimer). The UE may determine a start time of the on-duration timer according to the C-DRX cycle, and the UE periodically starts to run the on-duration timer. During the running period of the on-duration timer, the UE monitors the PDCCH. The active time of C-DRX also includes a running period of an inactivity timer (Drx InactivityTimer). The UE monitors the PDCCH during the active time of C-DRX. When the UE receives a PDCCH scheduling initial transmission data, the UE starts or restarts the inactivity timer, and continues to monitor the PDCCH during the running period of the inactivity timer.

In addition, the active time of C-DRX also includes a running period of a downlink retransmission timer (drx-RetransmissionTimerDL) and a running period of an uplink retransmission timer (drx-RetransmissionTimerUL). The downlink retransmission timer indicates a maximum time for receiving a downlink retransmission. The uplink retransmission timer indicates a maximum time for receiving an uplink retransmission scheduling.

It should be noted that the PDCCH mentioned in the above C-DRX mechanism mainly refers to a PDCCH carrying at least one of the following DCIs: DCI scrambled by a Cell-Radio Network Temporary Identifier (C-RNTI), a Cancellation Indication-RNTI (CI-RNTI), a Configured Scheduling-RNTI (CS-RNTI), an Interruption-RNTI (INT-RNTI), a Slot Format Indication-RNTI (SFI-RNTI), a Semi-Persistent Channel State Information (CSI)-RNTI (SP-CSI-RNTI), a Transmit Power Control-Physical Uplink Control Channel-RNTI (TPC-PUCCH-RNTI), a Transmit Power Control-Physical Uplink Shared Channel-RNTI (TPC-PUSCH-RNTI), a Transmit Power Control-Sounding Reference Signal-RNTI (TPC-SRS-RNTI), an Availability Indication-RNTI (AI-RNTI), a Sidelink-RNTI (SL-RNTI), a Sidelink Configured Scheduling-RNTI (SLCS-RNTI), and a Sidelink Semi-Persistent Scheduling V2X-RNTI (SL Semi-Persistent Scheduling V-RNTI). For some cell-common DCIs, such as DCIs scrambled by a System Information-RNTI (SI-RNTI), a Paging-RNTI (P-RNTI), a Temporary Cell-RNTI (TC-RNTI), etc., these DCIs are not affected by C-DRX, i.e., whether the UE monitors such DCIs does not need to be limited by the active time or the inactive time of C-DRX.

The C-DRX parameters are configured on a per-UE basis, meaning the C-DRX parameters can be different for different UEs. For example, for different UEs, the C-DRX period can be different, and the start position and running time of the on-duration timer can also be different.

The C-DRX parameters and parameter descriptions are shown in Table 1.

**Table 1**

| Parameter | Description |
|---|---|
| drx-onDurationTimer (also can be called on-duration timer) | A period of time at the beginning of each DRX cycle. |
| drx-SlotOffset (DRX slot offset) | Used for determining the start position of the drx-onDurationTimer. |
| drx-InactivityTimer (also can be called inactivity timer) | When the PDCCH indicates a new UL or DL transmission, the UE starts or restarts this timer. |
| drx-LongCycleStartOffset (DRX long cycle and start offset) | Includes two parameters: the length of the DRX long cycle and an offset value used for determining the start position of the DRX cycle. |
| drx-ShortCycle (DRX short cycle) | The length of the DRX short cycle; this parameter is optionally configured. |
| drx-ShortCycleTimer (DRX short cycle timer) | The duration for which the UE uses the DRX short cycle; this parameter is optionally configured. |
| drx-HARQ-RTT-TimerDL (DRX downlink Hybrid Automatic Repeat reQuest Round Trip Time (HARQ-RTT) timer, also can be called downlink HARQ-RTT timer) | This parameter indicates the minimum time the UE waits before receiving a DCI carrying a downlink retransmission, that is, it is used for determining the start time of the drx-RetransmissionTimerDL. |
| | When the PDCCH indicates a downlink transmission, or indicates a one-shot HARQ feedback, or indicates a retransmission of HARQ feedback, the UE starts or restarts the drx-HARQ-RTT-TimerDL of the corresponding HARQ process after the HARQ feedback. |
| drx-RetransmissionTimerDL (DRX downlink retransmission timer, also can | This parameter indicates the maximum time for receiving a downlink retransmission. When the drx-HARQ-RTT-TimerDL |
| be called downlink retransmission timer) | expires and the data of the corresponding HARQ process is decoded incorrectly, the UE starts the drx-RetransmissionTimerDL of this HARQ process. |
| drx-HARQ-RTT-TimerUL (DRX uplink HARQ-RTT timer, also can be called uplink HARQ-RTT timer) | This parameter indicates the minimum time before a DCI carrying an uplink retransmission, that is, it is used for determining the start time of the drx-RetransmissionTimerUL. |
| | When the PDCCH indicates an uplink transmission, the UE starts or restarts the drx-HARQ-RTT-TimerUL of the corresponding HARQ process after the Physical Uplink Shared Channel (PUSCH). If the PUSCH is a repeated transmission, the UE can decide, according to configured parameters, to start or restart the drx-HARQ-RTT-TimerUL of the corresponding HARQ process after the first PUSCH or after the last PUSCH. |
| drx-RetransmissionTimerUL (DRX uplink retransmission timer, also can be called uplink retransmission timer) | This parameter indicates the maximum time for receiving an uplink retransmission schedule. |
| | When the drx-HARQ-RTT-TimerUL expires, the UE starts the drx-RetransmissionTimerUL of this HARQ process. |

### II. Cell DTX (Cell Discontinuous Transmission)

To save power consumption of the base station, 3GPP introduced the Cell DTX mechanism, where the base station performs downlink transmission with the UE only during specific time periods and does not perform downlink transmission during other time periods, thereby achieving energy savings for the base station.

It should be noted that Cell DTX and C-DRX are two different mechanisms.

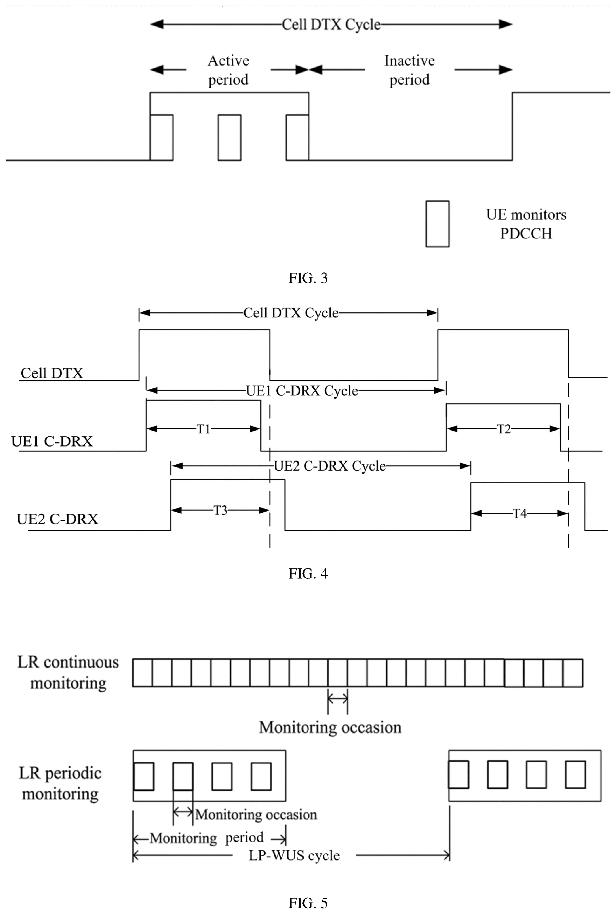

FIG. 3 is a schematic diagram of Cell DTX. The base station configures Cell DTX parameters for the UE. The Cell DTX parameters include a Cell DTX cycle, an offset value, and/or a length of an active time timer. To save power consumption of the base station, these parameters are usually the same for multiple UEs within a cell.

A time period corresponding to one Cell DTX period can include a Cell DTX active period and a Cell DTX inactive period.

During a Cell DTX active period (or ON period), the base station can transmit a DCI for scheduling new data transmission (for example, a DCI scrambled by C-RNTI, CS-RNTI, or Modulation and Coding Scheme-Cell-RNTI (MCS-C-RNTI) and scheduling new data transmission), DCI format 2_0/2_1/2_2/2_3/2_4/2_5 (i.e., DCI scrambled by SFI-RNTI, INT-RNTI, TPC-PUSCH-RNTI, TPC-PUCCH-RNTI, TPC-SRS-RNTI, CI-RNTI, or AI-RNTI), a semi-persistently scheduled Physical Downlink Shared Channel (PDSCH), a periodic Channel State Information-Reference Signal (CSI-RS) for measuring a Rank Indicator (RI), or a semi-persistent CSI-RS for measuring an RI. Correspondingly, the UE needs to receive these signals during the Cell DTX active period. During a Cell DTX inactive period (or OFF period), the base station does not transmit the foregoing signals to save its power consumption; correspondingly, the UE does not receive the corresponding signals.

It can be understood that the longer the Cell DTX inactive period, the longer the base station can sleep and the deeper the shutdown state, thereby achieving a better energy-saving effect. On the other hand, if the base station remains in the Cell DTX inactive period for a long time, the inability to perform data scheduling before entering the next Cell DTX active period will increase the service transmission delay once there is data to be transmitted.

The Cell DTX active period can also be called the Cell DTX duration and can be denoted as cellDRX-onDurationTimer. The Cell DTX inactive period is the time within the Cell DTX period other than the Cell DTX active period. The present disclosure does not limit the names of the Cell DTX active period, the inactive period, and the Cell DTX active time timer. It can be understood that while the cellDRX-onDurationTimer is running, the base station and the UE are in the Cell DTX active period. When the cellDRX-onDurationTimer expires, the base station and the UE enter the Cell DTX inactive period.

The base station and the UE can determine the start time of the Cell DTX active time timer according to the Cell DTX parameters. The Cell DTX active time timer occurs periodically.

When the Cell DTX mechanism and the C-DRX mechanism operate concurrently, the Cell DTX active period and the C-DRX active time may partially overlap. When the UE is in a C-DRX active time and a Cell DTX inactive period, the UE does not need to monitor the PDCCH for scheduling new data transmission. As shown in FIG. 4, the Cell DTX active and inactive periods are the same for UE1 and UE2 in the cell. The C-DRX parameters for UE1 are different from the C-DRX parameters for UE2. UE1 needs to monitor the PDCCH for scheduling new data transmission in time periods T1 and T2, and UE2 needs to monitor the PDCCH for scheduling new data transmission in time periods T3 and T4. That is, the UE monitors the PDCCH for scheduling new data transmission in the overlapping portion of the C-DRX active time and the Cell DTX active period.

For retransmission scheduling, when the Cell DTX mechanism and the C-DRX mechanism operate concurrently, if the uplink retransmission timer or the downlink retransmission timer of C-DRX is running, the UE can monitor the PDCCH regardless of the state of Cell DTX (i.e., whether the UE is in an inactive period or an active period of Cell DTX).

### III. Low-Power Wake-Up Signal (LP-WUS)

As described above, a UE may include a main receiver (MR) and a low-power wake-up receiver (LR). When no data is being transmitted, the UE can monitor the low-power wake-up signal via the LR while the MR is in a sleep state, thereby reducing UE power consumption. When data is to be transmitted, the UE can wake up the MR via the LR and perform data transmission with a base station via the MR, thereby ensuring throughput.

The waveform of the LP-WUS may be based on On-Off Keying (OOK), Amplitude Shift Keying (ASK), Frequency Shift Keying (FSK), or the like. The UE may process the LP-WUS by using a sequence detection method. The LP-WUS can be used to indicate the UE's behavior for monitoring the PDCCH. For example, to save power, the UE stops monitoring the PDCCH. In this case, the UE can turn off the MR. The base station can transmit an LP-WUS to the UE. The UE receives the LP-WUS via the LR. If the LP-WUS indicates that the UE is to monitor the PDCCH, the UE will turn on the MR and resume monitoring the PDCCH.

There are two possible methods for monitoring the LP-WUS. One is Continuous Monitoring, in which the LR needs to be always on. In this monitoring method, the UE has more opportunities to monitor the LP-WUS. Except for some special cases (e.g., encountering uplink symbols or the LP-WUS being deactivated), the UE needs to monitor the LP-WUS on a slot-by-slot or monitoring-occasion-by-monitoring-occasion basis. When the base station wants the UE to wake up the MR, it can notify the UE as soon as possible via the LP-WUS, which helps reduce data transmission delay. The other method is Duty Cycle Monitoring. In this monitoring method, the UE monitors the LP-WUS during certain time periods and does not need to monitor the LP-WUS during other time periods. The LR can be turned off during the periods when the LP-WUS is not monitored, which helps reduce UE power consumption. FIG. 5 is a schematic diagram of LP-WUS monitoring occasions in the continuous monitoring mode and the duty cycle monitoring mode. In the duty cycle monitoring mode, one LP-WUS monitoring period may include one or more monitoring occasions. The time interval from the start of one monitoring period to the start of the next adjacent monitoring period can be considered the LP-WUS period. The number of monitoring occasions in one LP-WUS monitoring period is not limited to the four shown in FIG. 5 and may be one, two, or another number; embodiments of the present application are not limited in this regard. A monitoring occasion may occupy some or all symbols in one slot, or it may occupy symbols of multiple slots. The present disclosure does not limit the duration of an LP-WUS monitoring occasion.

The LP-WUS can also be activated and deactivated. When the LP-WUS is activated, taking continuous monitoring of the LP-WUS as an example, the UE monitors the LP-WUS at the LP-WUS monitoring occasions. Taking periodic monitoring of the LP-WUS as an example, the UE monitors the LP-WUS at the monitoring occasions within the LP-WUS monitoring period. Conversely, when the LP-WUS is deactivated, taking continuous monitoring of the LP-WUS as an example, the UE does not monitor the LP-WUS at the LP-WUS monitoring occasions. Taking periodic monitoring of the LP-WUS as an example, the UE does not monitor the LP-WUS at the monitoring occasions within the LP-WUS monitoring period. Taking FIG. 5 as an example, when the LP-WUS is activated, the UE monitors the LP-WUS at the monitoring occasions shown in the figure. When the LP-WUS is deactivated, the UE does not monitor the LP-WUS at the monitoring occasions shown in the figure. The methods for activating/deactivating the LP-WUS are as follows:
- Method 1: The base station transmits Radio Resource Control (RRC) signaling to the UE to indicate activation or deactivation of the LP-WUS.
- Method 2: The base station indicates activation or deactivation of the LP-WUS to the UE through L1 or L2 control signaling. For example, when the MR is in an on state, the UE can monitor the PDCCH, and the base station can indicate activation or deactivation of the LP-WUS through Downlink Control Information (DCI) in the PDCCH. As another example, the base station can also indicate activation or deactivation of the LP-WUS through an LP-SS. In an embodiment, the L2 signaling can be a Medium Access Control (MAC) Control Element (CE). The MAC CE carries indication information for activating or deactivating the LP-WUS, and the UE can activate or deactivate the LP-WUS by receiving the MAC CE message via the MR.
- Method 3: The UE activates or deactivates the LP-WUS based on a predefined rule or method. For example, the LP-WUS is activated or deactivated based on a timer. The length of the timer can be configured for the UE by the base station.

It should be noted that in the present disclosure, "monitoring" can also be described as "receiving" or "detecting". For example, the act of monitoring the LP-WUS can also be described as receiving the LP-WUS or detecting the LP-WUS. An LP-WUS monitoring occasion refers to the symbol position or slot position where the LP-WUS monitored by the UE is located, and may also be referred to as a receiving occasion, a detecting occasion, etc. The present disclosure does not limit this naming.

It should also be noted that in the present disclosure, "not monitoring" can also be described as "stopping monitoring" or "skipping monitoring". For example, a UE not monitoring the LP-WUS can be described as the UE stopping monitoring the LP-WUS. As another example, a UE not monitoring the PDCCH can be described as the UE stopping monitoring the PDCCH. Similarly, "not transmitting" can also be described as "stopping transmitting" or "skipping transmitting", and "not receiving" can also be described as "stopping receiving" or "skipping receiving".

When a UE is configured with Cell DTX and/or C-DRX mechanism and is also configured with an LP-WUS function, how the UE monitors the LP-WUS is a problem that needs to be solved to ensure that the understanding of the base station and the UE remains consistent, so that normal communication can occur between them.

The communication method provided in embodiments of the present application is described in detail below.

An embodiment of the present application provides a communication method, which includes steps S10, S20, and S30. In step S10, a UE receives first information. The first information includes Cell DTX parameters (or referred to as first parameters) and/or C-DRX parameters, and LP-WUS parameters (or referred to as second parameters). The Cell DTX parameters include the Cell DTX period, and the C-DRX parameters include the C-DRX period. The first information is received via the MR (which may also be referred to as a first receiver). Correspondingly, the base station transmits the first information.

In step S20, the UE determines a monitoring occasion of the LP-WUS according to the LP-WUS parameters. Correspondingly, the base station can also determine the monitoring occasion of the LP-WUS, that is, the base station can determine the monitoring occasion at which the UE is to monitor the LP-WUS.

In step S30, the UE determines a monitoring behavior for the LP-WUS according to the Cell DTX parameters and/or the C-DRX parameters, and the LP-WUS monitoring occasion. Correspondingly, the base station can also determine the monitoring behavior for the LP-WUS according to the Cell DTX parameters and/or the C-DRX parameters, and the LP-WUS monitoring occasion, that is, the base station can determine the UE's LP-WUS monitoring behavior.

Steps S20 and S30 can be performed concurrently or sequentially; the present disclosure does not limit this.

The LP-WUS is used for at least indicating a behavior of the UE for monitoring the PDCCH. Specifically, the LP-WUS can be used to indicate whether the UE is to monitor or not monitor the PDCCH at a subsequent PDCCH monitoring occasion. Alternatively, the function of the LP-WUS can be described as indicating whether the UE is to wake up the MR. If the UE wakes up the MR, the UE monitors the PDCCH. If the UE does not wake up the MR, the UE does not monitor the PDCCH. The DCI carried by this PDCCH can be at least one of DCI scrambled by C-RNTI, CS-RNTI, or MCS-C-RNTI, or at least one of DCI scrambled by CI-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI, or SL Semi-Persistent Scheduling V-RNTI.

The UE can determine the PDCCH monitoring behavior according to the detection result of the LP-WUS. The UE can determine whether to monitor or not monitor the PDCCH according to different sequences carried by the detected LP-WUS. For example, sequence 1 indicates that the UE is to monitor the PDCCH, and sequence 2 indicates that the UE is not to monitor the PDCCH. Alternatively, the UE determines whether to monitor or not monitor the PDCCH according to different values carried by the detected LP-WUS. For example, an LP-WUS value of A indicates that the UE is to monitor the PDCCH, and an LP-WUS value of B indicates that the UE is not to monitor the PDCCH. Alternatively, the UE determines whether to monitor or not monitor the PDCCH based on whether an LP-WUS is detected. For example, detection of the LP-WUS indicates that the UE is to monitor the PDCCH, and non-detection of the LP-WUS indicates that the UE is not to monitor the PDCCH.

The LP-WUS can be received via the LR (which may also be referred to as a second receiver).

The C-DRX parameters may include the C-DRX period, and the LP-WUS parameters may include the time/frequency domain position of the LP-WUS, and/or the LP-WUS period, etc.

By determining the LP-WUS monitoring behavior based on the Cell DTX parameters and/or the C-DRX parameters and the LP-WUS monitoring occasion, the UE and the base station ensure that their respective behaviors are consistent, thereby enabling normal communication between them.

The communication method according to embodiments of the present application can be performed not only by a UE but also by a base station. Optionally, the communication method can be performed by a chip in the UE and a chip in the base station. Herein, the base station includes a processor and a memory. The memory is used for storing a computer program, and the processor is used for calling and running the computer program stored in the memory to execute the communication method according to embodiments of the present application. The UE includes a processor and a memory. The memory is used for storing a computer program, and the processor is used for calling and running the computer program stored in the memory to execute the communication method according to embodiments of the present application. The communication method performed by the UE is described below as an example.

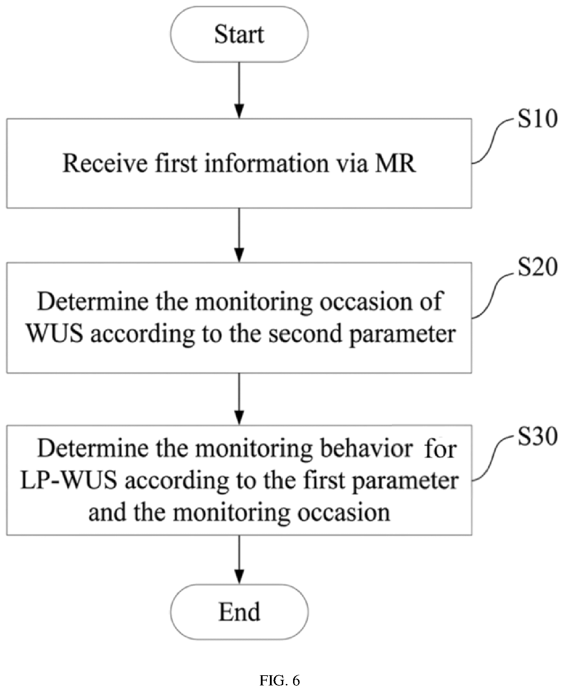

FIG. 6 is a schematic flowchart of a communication method according to an embodiment of the present application. The communication method in FIG. 6 can be performed by the UE in FIG. 1 described above. The communication method of an embodiment of the present application is applicable to cases where the Cell DTX mechanism, the C-DRX mechanism, or both the Cell DTX mechanism and the C-DRX mechanism operate concurrently. These three cases are described separately below.

### I. UE Configured with Cell DTX and not with C-DRX

A communication method provided in an embodiment of the present application includes steps S10, S20, and S30.

In step S10, a user equipment (UE) receives first information. The first information includes Cell DTX parameters and LP-WUS parameters. The Cell DTX parameters include a Cell DTX cycle. The first information is received via a MR.

In an embodiment, the LP-WUS is at least used for indicating a behavior of the UE for monitoring a PDCCH. The LP-WUS is received via a LR.

In an embodiment, step S10 may include: the UE receives Cell DTX parameters, where the Cell DTX parameters include a cycle, an offset value, and/or a length of an activation time timer, etc.; and the UE receives the LP-WUS parameters, where the LP-WUS parameters may include a time-domain position and/or a frequency-domain position of the LP-WUS, etc. Optionally, the LP-WUS parameters may also include a LP-WUS cycle and/or a monitoring period of the LP-WUS. A time interval corresponding to one LP-WUS cycle may include a monitoring period and a non-monitoring period of the LP-WUS. The non-monitoring time refers to the time within a LP-WUS cycle that is outside the monitoring period. Embodiments of the present application do not limit the names of the monitoring period and non-monitoring period of the LP-WUS.

In an embodiment, the Cell DTX parameters may be carried by Radio Resource Control (RRC) signaling.

In an embodiment, the LP-WUS parameters may be carried by RRC signaling. In an embodiment, the Cell DTX parameters and the LP-WUS parameters may be carried by the same RRC signaling or by different RRC signaling. The step of receiving the Cell DTX parameters and the step of receiving the LP-WUS parameters may be performed simultaneously or may be performed separately in various orders.

In an embodiment, the LP-WUS parameters may be carried by a System Information Block (SIB) message. In an example, step S10 may include: the UE receives the LP-WUS parameters carried by a SIB message; and the UE receives the Cell DTX parameters carried by RRC signaling.

The communication method provided in an embodiment of the present application further includes: the UE receives LP-SS parameters, for example, the time/frequency-domain position of the LP-SS, etc. The LP-SS parameters may be carried by a SIB message or by RRC signaling.

In step S20, the UE determines a monitoring occasion of the LP-WUS according to the LP-WUS parameters.

In an embodiment, the UE determines one or more monitoring occasions of the LP-WUS according to the received the LP-WUS parameters.

In step S30, the UE determines a monitoring behavior for the LP-WUS according to the Cell DTX parameters and the monitoring occasion of the LP-WUS.

In an embodiment, step S30 may include: when the monitoring occasion of the LP-WUS is within an inactive period of Cell DTX, the UE does not monitor the LP-WUS at the monitoring occasion. Correspondingly, when the monitoring occasion of the LP-WUS is within the inactive period of Cell DTX, the base station does not transmit the LP-WUS at the monitoring occasion.

In an embodiment, step S30 may include: when the monitoring occasion of the LP-WUS is within an inactive period of Cell DTX, the UE monitors the LP-WUS at the monitoring occasion. Correspondingly, when the monitoring occasion of the LP-WUS is within the inactive period of Cell DTX, the base station may transmit the LP-WUS at the monitoring occasion.

The monitoring behavior of the UE at the monitoring occasion of the LP-WUS (i.e., monitoring the LP-WUS or not monitoring the LP-WUS) when the monitoring occasion of the LP-WUS is within the inactive period of Cell DTX will be described below.

First, some embodiments of the present application will be described. In these embodiments, when a monitoring occasion of the LP-WUS is within the inactive period of Cell DTX, the UE does not monitor the LP-WUS at the monitoring occasion.

For example, as described above, step S30 may include: when the monitoring occasion of the LP-WUS is within the inactive period of Cell DTX, the UE does not monitor the LP-WUS at the monitoring occasion. Correspondingly, within the inactive period of Cell DTX, the base station does not transmit the LP-WUS at the monitoring occasion. Through this embodiment, signals transmitted by the base station during the inactive time of Cell DTX can be reduced, thereby saving power consumption of the base station. The UE can also reduce received signals, saving power consumption of the terminal. At the same time, by ensuring that the UE-side behavior and the base station-side behavior are consistent, normal communication can be maintained between the base station and the UE.

In an embodiment, the UE does not monitor the LP-WUS at at least one monitoring occasion of the LP-WUS within the inactive period of Cell DTX. For example, the UE does not monitor the LP-WUS at some of the monitoring occasions of the LP-WUS within the inactive period of Cell DTX.

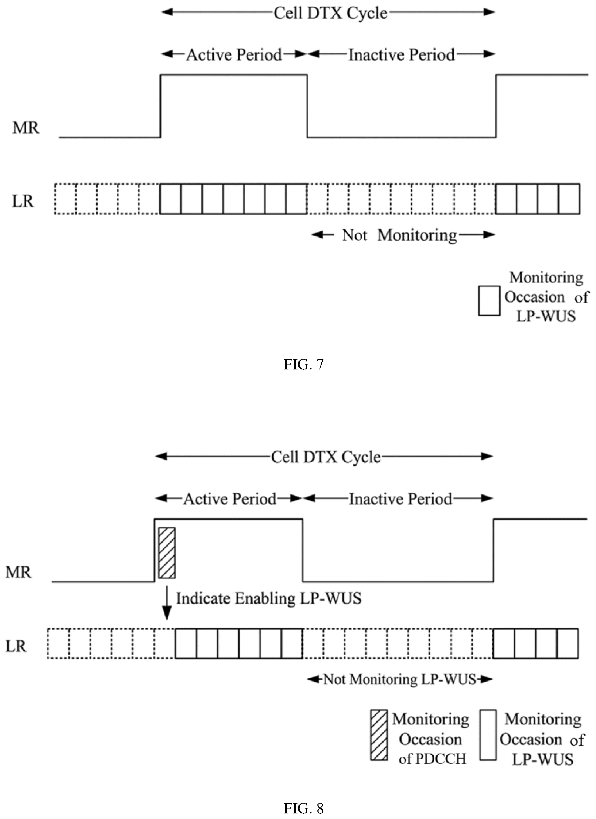

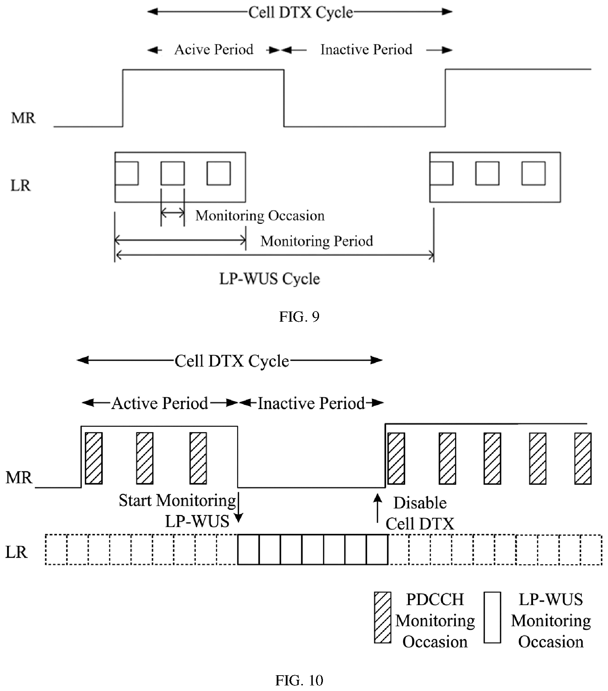

In an embodiment, in a continuous monitoring mode (for example, as shown in FIG. 7 and FIG. 8) and a periodic monitoring mode (for example, as shown in FIG. 9), when the monitoring occasion of the LP-WUS is within the inactive period of Cell DTX, the UE does not monitor the LP-WUS at the monitoring occasion. A detailed description will be given below.

FIG. 7 and FIG. 8 show schematic diagrams of monitoring occasions of Cell DTX and LP-WUS in a continuous monitoring mode according to an embodiment of the present application. In FIG. 7 and FIG. 8, monitoring occasions where the LP-WUS is not monitored are indicated by dashed lines.

In an embodiment, as shown in FIG. 7, in the continuous monitoring mode, when a monitoring occasion of the LP-WUS is within an active period of Cell DTX, the UE monitors the LP-WUS at the monitoring occasion. When the monitoring occasion of the LP-WUS is within an inactive period of Cell DTX, the UE does not monitor the LP-WUS at the monitoring occasion. Further, the UE may monitor the LP-WUS in the active period of the next Cell DTX period. In an embodiment, the UE runs an activation time timer of Cell DTX. After the activation time timer of Cell DTX expires, the UE does not monitor the LP-WUS at the monitoring occasions of the LP-WUS until the active period of the next Cell DTX period, at which time the UE can resume monitoring the LP-WUS. As another example, the LP-WUS can also be enabled (or activated). After the LP-WUS is enabled, when a monitoring occasion of the LP-WUS is within the active period of Cell DTX, the UE monitors the LP-WUS at the monitoring occasion. When the UE enters an inactive period of Cell DTX, the UE does not monitor the LP-WUS at the monitoring occasions of the LP-WUS, as shown in FIG. 8.

FIG. 9 shows a schematic diagram of monitoring occasions of Cell DTX and LP-WUS in a periodic monitoring mode according to an embodiment of the present application.

In an embodiment, step S30 may include: at least one monitoring occasion within a monitoring period of the LP-WUS is included in the active period of the Cell DTX. In an embodiment, at least one LP-WUS monitoring occasion within the monitoring period of the LP-WUS is included in the active period of Cell DTX. When an LP-WUS monitoring occasion is in the active period of Cell DTX, the UE monitors the LP-WUS at the LP-WUS monitoring occasion; when an LP-WUS monitoring occasion is in the inactive period of Cell DTX, the UE does not monitor the LP-WUS at the LP-WUS monitoring occasion, as shown in FIG. 9. FIG. 9 schematically illustrates the relationship between the period of Cell DTX and the monitoring period of the LP-WUS, as well as the number of monitoring occasions in the monitoring period, but embodiments of the present application are not limited thereto.

In another embodiment, all LP-WUS monitoring occasions within the monitoring period of the LP-WUS are included in the active period of Cell DTX. This can also be understood as the monitoring period of the LP-WUS being included in the active period of Cell DTX. Therefore, the UE will not monitor the LP-WUS within the inactive period of Cell DTX. In this embodiment, all LP-WUS monitoring occasions within the monitoring period of the LP-WUS are included in the active period of Cell DTX, and the LP-WUS cycle and the Cell DTX cycle are aligned.

Next, other embodiments of the present application will be described. In these embodiments, when a monitoring occasion of the LP-WUS is within the inactive period of Cell DTX, the UE monitors the LP-WUS at the monitoring occasion of the LP-WUS.

For example, as described above, step S30 may include: when a monitoring occasion of the LP-WUS is within the inactive period of Cell DTX, the UE monitors the LP-WUS at the monitoring occasion. Correspondingly, within the inactive period of Cell DTX, the base station may transmit the LP-WUS at the monitoring occasion. Through this embodiment, the base station can further adjust Cell DTX parameters or state through the LP-WUS during the inactive period of Cell DTX, improving the flexibility of the base station. Alternatively, the base station can control the UE's behavior of monitoring the PDCCH in the next active period of Cell DTX through the LP-WUS, saving terminal power consumption.

In an embodiment, regardless of whether the UE monitors the LP-WUS in the active period of Cell DTX, once the UE enters the inactive period of Cell DTX, the UE monitors the LP-WUS at the monitoring occasions of the LP-WUS within the inactive period of Cell DTX. For example, the UE does not monitor the LP-WUS in the active period of Cell DTX (e.g., the LP-WUS is disabled), but when the UE enters the inactive period of Cell DTX, the UE will monitor the LP-WUS at the monitoring occasions of the LP-WUS within the inactive period of Cell DTX. As another example, the UE monitors the LP-WUS in the active period of Cell DTX (e.g., the LP-WUS is enabled), but when the UE enters the inactive period of Cell DTX, the UE will continue to monitor the LP-WUS at the monitoring occasions of the LP-WUS within the inactive period of Cell DTX. In an embodiment, if there is no data to be transmitted in the inactive period of Cell DTX, the UE can continue to monitor the LP-WUS in the active period of the next Cell DTX period without monitoring the PDCCH via the MR, saving terminal power consumption. If there is data to be transmitted in the inactive period of Cell DTX, the base station can indicate to the UE to resume PDCCH monitoring through the LP-WUS. The UE can start monitoring the PDCCH in the active period of the next Cell DTX period, so that the base station can perform data scheduling for the UE. In an embodiment, the base station can also adjust the Cell DTX parameters or enable/disable Cell DTX through the LP-WUS. For example, the base station adjusts the Cell DTX parameters or enables/disables Cell DTX through the LP-WUS, thereby achieving the effect of saving power consumption or reducing transmission delay. As shown in FIG. 10, when there is a large amount of data to be transmitted between the base station and the UE, the base station indicates to disable Cell DTX through the LP-WUS. Then, the Cell DTX mechanism will be disabled, meaning it can be considered that the UE is always active. The UE can continuously monitor the PDCCH until Cell DTX is enabled again and the UE enters an inactive period of Cell DTX.

In an embodiment, at least one LP-WUS monitoring occasion within the monitoring period of the LP-WUS is included in the inactive period of Cell DTX, and the LP-WUS is monitored at the at least one monitoring occasion of the LP-WUS.

In an embodiment of the present application, the communication method also includes: the UE obtains a first offset, Offset1, and/or a second offset, Offset2; the UE determines a monitoring period of the LP-WUS based on the first offset, Offset1, and/or the second offset, Offset2. The first offset, Offset1, is used for indicating an offset of a start point of the monitoring period relative to a start point of an activation time timer of the Cell DTX. The second offset, Offset2, is used for indicating an offset of an end time of the monitoring period relative to the start point of the activation time timer of the Cell DTX. In an embodiment, the first offset, Offset1, is transmitted by the base station to the UE, and the second offset, Offset2, is either sent by the base station to the UE or is reported by the UE to the base station. The second offset, Offset2, may be related to UE capability. Specifically, the UE can report the second offset, Offset2, to the base station through UE capability signaling.

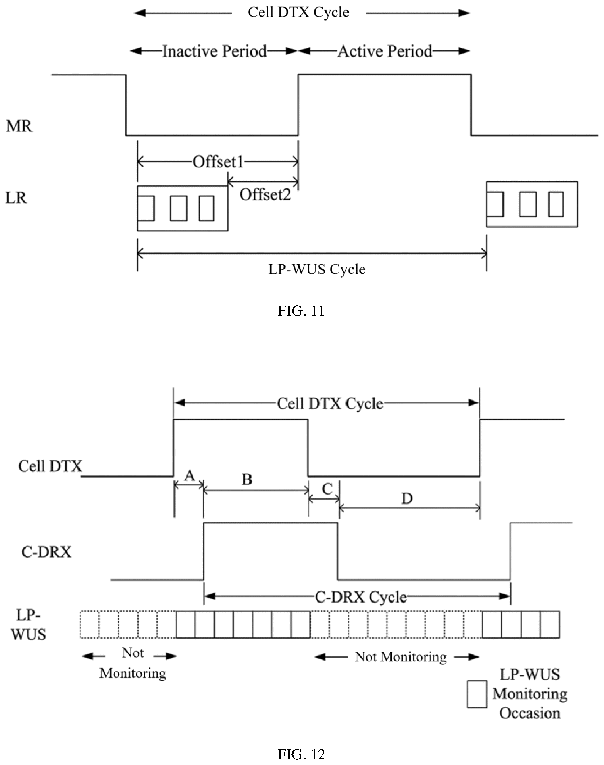

As shown in FIG. 11, at least one monitoring occasion of a LP-WUS within a monitoring period of the LP-WUS is included in an inactive period of Cell DTX, and the LP-WUS is monitored at the at least one LP-WUS monitoring occasion. For example, a UE obtains Cell DTX parameters, a first offset Offset1, and LP-WUS parameters. The UE may further obtain a second offset Offset2. The UE determines a monitoring occasion of the LP-WUS according to the LP-WUS parameters. A monitoring period of the LP-WUS is determined based on the Cell DTX parameters, the first offset Offset1, the second offset Offset2, and the LP-WUS parameters. The first offset indicates an offset of a start point of the monitoring period relative to a start point of an activation time timer of Cell DTX, and the second offset indicates an offset of an end time of the monitoring period relative to the start point of the activation time timer of Cell DTX. The LP-WUS monitoring occasions within the monitoring period of the LP-WUS are within the inactive period of Cell DTX, and the UE monitors the LP-WUS at the LP-WUS monitoring occasions. Embodiments of the present application are not limited thereto. FIG. 11 schematically shows the relationship between the period of Cell DTX and the monitoring period of the LP-WUS.

In an embodiment, the communication method according to embodiments of the present application may also be performed by a base station executing the following steps: the base station transmits first information, where the first information includes Cell DTX parameters and LP-WUS parameters, and the Cell DTX parameters include a Cell DTX cycle; the base station determines a monitoring occasion of the LP-WUS; the base station determines a behavior of the UE monitoring the LP-WUS according to the Cell DTX parameters and the monitoring occasion of the LP-WUS. The communication method performed by the base station may be similar to the communication method in the above embodiments, and therefore, a repeated description is omitted here.

The foregoing describes in detail the communication method for the LP-WUS under the Cell DTX mechanism.

The above communication method and variations thereof in the embodiments of the present application are also applicable to the C-DRX mechanism.

### II. UE is configured with C-DRX and not configured with Cell DTX

In an embodiment, the communication method includes: a UE receives first information, where the first information includes C-DRX parameters and LP-WUS parameters, and the C-DRX parameters include a C-DRX cycle; the UE determines a monitoring occasion of the LP-WUS according to the LP-WUS parameters; and the UE determines a monitoring behavior for the LP-WUS according to the C-DRX parameters and the monitoring occasion of the LP-WUS. The first information is received through a Main Receiver (MR).

In an embodiment, the LP-WUS is at least used for indicating a behavior of the UE for monitoring a PDCCH. The LP-WUS is received through a Low-power Receiver (LR).

In an embodiment, the step of receiving the first information may include: the UE receives C-DRX parameters, where the C-DRX parameters include a period, an offset value, and/or a length of an on-duration timer, etc.; and the UE receives the LP-WUS parameters, where the LP-WUS parameters may include a time-domain position and/or a frequency-domain position of the LP-WUS, etc. Optionally, the LP-WUS parameters may also include a LP-WUS cycle and/or a monitoring period of the LP-WUS. A time interval corresponding to one LP-WUS cycle may include a monitoring period and a non-monitoring period of the LP-WUS, that is, the non-monitoring time refers to the time interval in the LP-WUS cycle other than the monitoring period. The names of the monitoring period and non-monitoring period of the LP-WUS are not limited in the embodiments of the present application.

In an embodiment, the C-DRX parameters may be carried by RRC signaling.

In an embodiment, the LP-WUS parameters may be carried by RRC signaling. In an embodiment, the C-DRX parameters and the LP-WUS parameters may be carried by the same RRC signaling or by different RRC signaling. The step of receiving the C-DRX parameters and the step of receiving the LP-WUS parameters may be performed simultaneously, or may be performed separately in various orders.

In an embodiment, the LP-WUS parameters may be carried by a System Information Block (SIB) message. In one example, the step of receiving the first information may include: the UE receives the LP-WUS parameters carried by a SIB message; and the UE receives the C-DRX parameters carried by RRC signaling.

The method provided by the embodiments of the present application also includes: the UE receives Low-Power Synchronization Signal (LP-SS) parameters, for example, the time/frequency domain position of the LP-SS, etc. The LP-SS parameters may be carried by a SIB message or by RRC signaling.

In an embodiment, the UE determines one or more monitoring occasions of the LP-WUS according to the received the LP-WUS parameters.

In an embodiment, determining the monitoring behavior for the LP-WUS according to the C-DRX parameters and the monitoring occasion of the LP-WUS may specifically include: when a monitoring occasion of the LP-WUS is within an inactive time of the C-DRX, the UE does not monitor the LP-WUS at the monitoring occasion. Correspondingly, when the monitoring occasion of the LP-WUS is within the inactive time of the C-DRX, the base station does not transmit the LP-WUS at the monitoring occasion.

In an embodiment, determining the monitoring behavior for the LP-WUS according to the C-DRX parameters and the monitoring occasion of the LP-WUS may specifically include: when a monitoring occasion of the LP-WUS is within an inactive time of the C-DRX, the UE monitors the LP-WUS at the monitoring occasion. Correspondingly, when the monitoring occasion of the LP-WUS is within the inactive time of the C-DRX, the base station does not transmit the LP-WUS at the monitoring occasion.

Hereinafter, the monitoring behavior of the UE at a monitoring occasion of the LP-WUS (i.e., monitoring the LP-WUS and not monitoring the LP-WUS) when the monitoring occasion of the LP-WUS is within an inactive time of the C-DRX will be described separately.

First, the following embodiments are described as examples, in which when a monitoring occasion of the LP-WUS is within an inactive time of the C-DRX, the UE does not monitor the LP-WUS at the monitoring occasion.

For example, as described above, the step of determining the monitoring behavior for the LP-WUS according to the C-DRX parameters and the monitoring occasion of the LP-WUS may include: when a monitoring occasion of the LP-WUS is within an inactive time of the C-DRX, the UE does not monitor the LP-WUS at the monitoring occasion. Correspondingly, within the inactive time of the C-DRX, the base station does not transmit the LP-WUS at the monitoring occasion of the LP-WUS. Through this embodiment, the UE can reduce received signals and save power consumption of the terminal. The base station can reduce signals sent during the inactive time of the C-DRX, thereby saving power consumption of the base station. Meanwhile, by ensuring that the behavior on the UE side and the behavior on the base station side are consistent, the base station and the UE can communicate normally.

In an embodiment, the UE does not monitor the LP-WUS at at least one monitoring occasion of the LP-WUS within the inactive time of the C-DRX. For example, the UE does not monitor the LP-WUS at some of the monitoring occasions of the LP-WUS within the inactive time of the C-DRX.

In an embodiment, in a continuous monitoring mode or a periodic monitoring mode, when a monitoring occasion of the LP-WUS is within an inactive time of the C-DRX, the UE does not monitor the LP-WUS at the monitoring occasion. A detailed description is provided below.

In an embodiment, when a monitoring occasion of the LP-WUS is within an active time of the C-DRX, the UE monitors the LP-WUS at the monitoring occasion of the LP-WUS, and when a monitoring occasion of the LP-WUS is within an inactive time of the C-DRX, the UE does not monitor the LP-WUS at the monitoring occasion of the LP-WUS. Further, the UE may monitor the LP-WUS in the active time of the next C-DRX cycle. In an embodiment, the UE runs at least one of a C-DRX on-duration timer, a C-DRX inactivity timer (drx-InactivityTimer), a C-DRX downlink retransmission timer (drx-RetransmissionTimerDL), or a C-DRX uplink retransmission timer (drx-HARQ-RTT-TimerUL). After at least one of these timers expires or after all of these timers expire, the UE does not monitor the LP-WUS at monitoring occasions of the LP-WUS until the active time of the next C-DRX cycle, when the UE may resume monitoring the LP-WUS. As another example, the LP-WUS may also be enabled (or activated). After the LP-WUS is enabled, when a monitoring occasion of the LP-WUS is within the active time of the C-DRX, the UE monitors the LP-WUS at the monitoring occasion. The UE starts monitoring the LP-WUS only after the LP-WUS is enabled within the active time of the C-DRX. When the UE enters an inactive time of the C-DRX, the UE does not monitor the LP-WUS at monitoring occasions of the LP-WUS. The above embodiment may be applicable to a continuous monitoring mode.

In an embodiment, the step of determining the monitoring behavior for the LP-WUS according to the C-DRX parameters and the listening occasions of the LP-WUS may include: at least one monitoring occasion within the monitoring period of the LP-WUS is included in the active time of the C-DRX.

In an embodiment, at least one LP-WUS monitoring occasion within the monitoring period of the LP-WUS is included in an active time of the C-DRX, where when an LP-WUS monitoring occasion is in the active time of the C-DRX, the UE monitors the LP-WUS at the LP-WUS monitoring occasion; and when an LP-WUS monitoring occasion is in an inactive time of the C-DRX, the UE does not monitor the LP-WUS at the LP-WUS monitoring occasion.

In an embodiment, all LP-WUS monitoring occasions within the monitoring period of the LP-WUS are included in the active time of the C-DRX, and therefore, the UE will not monitor the LP-WUS during the inactive time of the C-DRX. In this embodiment, all LP-WUS monitoring occasions within the monitoring period of the LP-WUS are included in the active time of the C-DRX, and the LP-WUS cycle and the C-DRX cycle are aligned.

Next, other embodiments are described as examples, in which when a monitoring occasion of the LP-WUS is within an inactive time of the C-DRX, the UE monitors the LP-WUS at the monitoring occasion.

For example, as described above, the step of determining the monitoring behavior for the LP-WUS according to the C-DRX parameters and the monitoring occasion of the LP-WUS may include: when a monitoring occasion of the LP-WUS is within an inactive time of the C-DRX, the UE monitors the LP-WUS at the monitoring occasion. Correspondingly, within the inactive time of the C-DRX, the base station may transmit the LP-WUS at the monitoring occasion of the LP-WUS. Through this embodiment, the base station can further adjust C-DRX parameters or states through the LP-WUS during the inactive time of the C-DRX to improve the flexibility of the base station, or the base station can control the UE's behavior of monitoring the PDCCH in the next active time of the C-DRX through the LP-WUS, thereby saving power consumption of the terminal.

In an embodiment, regardless of whether the UE monitors the LP-WUS in the active time of the C-DRX, once the UE enters an inactive time of the C-DRX, the UE monitors the LP-WUS at monitoring occasions of the LP-WUS within the inactive time of the C-DRX. For example, the UE does not monitor the LP-WUS in the active time of the C-DRX (e.g., the LP-WUS is disabled), but when the UE enters an inactive time of the C-DRX, the UE will monitor the LP-WUS at monitoring occasions of the LP-WUS within the inactive time of the C-DRX. As another example, the UE monitors the LP-WUS in the active time of the C-DRX (e.g., the LP-WUS is enabled), but when the UE enters an inactive time of the C-DRX, the UE will continue to monitor the LP-WUS at monitoring occasions of the LP-WUS within the inactive time of the C-DRX. In an embodiment, if there is no data to be transmitted in the inactive time of the C-DRX, the UE can continue to monitor the LP-WUS in the active time of the next C-DRX cycle without monitoring the PDCCH via the MR, thereby saving power consumption of the terminal. If there is data to be transmitted in the inactive time of the C-DRX, the base station can indicate to the UE to resume PDCCH monitoring through the LP-WUS, and the UE can start monitoring the PDCCH in the active time of the next C-DRX cycle, so that the base station can perform data scheduling for the UE. In an embodiment, the base station can also adjust the C-DRX parameters or enable/disable the C-DRX through the LP-WUS. For example, the base station adjusts the C-DRX parameters through the LP-WUS, thereby achieving the effect of saving power consumption or reducing transmission delay.

In an embodiment, at least one LP-WUS monitoring occasion within the monitoring period of the LP-WUS is included in the inactive time of the C-DRX, and the LP-WUS is monitored at the at least one monitoring occasion of the LP-WUS.

The communication method provided by the embodiments of the present application also includes: the UE obtains a first offset Offset1 and/or a second offset Offset2; and the UE determines a monitoring period of the LP-WUS based on the first offset Offset1 and/or the second offset Offset2, where the first offset Offset1 is used for indicating an offset of a start point of the monitoring period relative to a start point of an on-duration timer of the C-DRX, and the second offset Offset2 is used for indicating an offset of an end time of the monitoring period relative to the start point of the on-duration timer of the C-DRX. In an embodiment, the first offset Offset1 is transmitted by the base station to the UE, and the second offset Offset2 is transmitted by the base station to the UE or is reported by the UE to the base station. The second offset Offset2 may be related to UE capability. Specifically, the UE may report the second offset Offset2 to the base station through UE capability signaling.

At least one LP-WUS monitoring occasion within the monitoring period of the LP-WUS is included in an inactive time of the C-DRX, and the UE monitors the LP-WUS at the at least one monitoring occasion of the LP-WUS. Exemplarily, the UE obtains C-DRX parameters, a first offset Offset1, and LP-WUS parameters, and the UE may further obtain a second offset Offset2; the UE determines monitoring occasions of the LP-WUS according to the LP-WUS parameters; a monitoring period of the LP-WUS is determined based on the C-DRX parameters, the first offset Offset1, the second offset Offset2, and the LP-WUS parameters, where the first offset is used for indicating an offset of a start point of the monitoring period relative to a start point of an on-duration timer of the C-DRX, and the second offset is used for indicating an offset of an end time of the monitoring period relative to the start point of the on-duration timer of the C-DRX. LP-WUS monitoring occasions within the monitoring period of the LP-WUS are included in the inactive time of the C-DRX, and the UE monitors the LP-WUS at the LP-WUS monitoring occasions.

In an embodiment, the communication method according to the embodiments of the present application may also be performed by a base station executing the following steps: the base station transmits the first information, wherein the first information includes C-DRX parameters and LP-WUS parameters, and the C-DRX parameters include a C-DRX cycle; the base station determines a monitoring occasion of the LP-WUS; and the base station determines a behavior of the UE for monitoring the LP-WUS according to the C-DRX parameters and the monitoring occasion of the LP-WUS. The communication method performed by the base station may be similar to the above. Therefore, a repeated description will not be provided herein. In an embodiment, a communication method according to an embodiment of the present application may be performed by a chip in a UE or a chip in a base station. Herein, the base station includes a processor and a memory, where the memory is configured to store a computer program, and the processor is configured to invoke and run the computer program stored in the memory to perform the communication method according to an embodiment of the present application. The UE includes a processor and a memory, where the memory is configured to store a computer program, and the processor is configured to invoke and run the computer program stored in the memory to perform the communication method according to an embodiment of the present application. The communication method under the Cell DTX mechanism according to the foregoing embodiments may also be applied to the C-DRX mechanism. A repeated description thereof is not provided herein.

### III. UE Configured with C-DRX and Cell DTX

In an embodiment of the present application, the foregoing communication method is also applicable to a case where the C-DRX mechanism and the Cell DTX mechanism operate concurrently. A detailed description is provided below. Some descriptions of the foregoing communication method under the Cell DTX mechanism are also applicable here and will not be repeated.

A communication method according to an embodiment of the present application includes: a UE receives first information, where the first information includes C-DRX parameters, Cell DTX parameters, and LP-WUS parameters. The C-DRX parameters include a C-DRX cycle, and the Cell DTX parameters include a Cell DTX cycle. The first information is received through a MR. Correspondingly, a base station transmits the first information. The UE determines a monitoring occasion of the LP-WUS according to the LP-WUS parameters. Correspondingly, the base station can also determine the monitoring occasion of the LP-WUS. A monitoring behavior for the LP-WUS is determined according to the C-DRX parameters, the Cell DTX parameters, and the monitoring occasion of the LP-WUS. The UE does not monitor the LP-WUS at monitoring occasions within a specific period, thereby reducing the power consumption of the UE. Correspondingly, the base station can also determine the UE's LP-WUS monitoring behavior according to the Cell DTX parameters, the C-DRX parameters, and the monitoring occasion of the LP-WUS. The communication method performed by the UE will be described below as an example. A person skilled in the art can derive the corresponding communication method performed by the base station based on the communication method performed by the UE. A detailed description thereof will not be provided here.

In an embodiment, when the C-DRX mechanism and the Cell DTX mechanism operate concurrently, the C-DRX parameters and the Cell DTX parameters can be carried by RRC signaling, respectively. The C-DRX parameters and the Cell DTX parameters can be carried by the same RRC signaling or by different RRC signaling. The Cell DTX parameters, the C-DRX parameters, and the LP-WUS parameters can also be carried by the same RRC signaling or by different RRC signaling. Receiving the C-DRX parameters, receiving the Cell DTX parameters, and receiving the LP-WUS parameters can be performed simultaneously or can be performed separately in any order. The LP-WUS parameters can also be carried by a SIB message. The UE can receive the LP-WUS parameters carried by the SIB message, and the UE receives the Cell DTX parameters and the C-DRX parameters carried by RRC signaling. The embodiments of the present application are not limited to this method for configuring the Cell DTX parameters and the LP-WUS parameters.

When the C-DRX mechanism and the Cell DTX mechanism operate concurrently, the active period of Cell DTX and the active time of C-DRX may not completely overlap.

In an embodiment, when the monitoring occasion of the LP-WUS is within an active period of Cell DTX and within an inactive time of C-DRX, the UE monitors the LP-WUS at at least one of the monitoring occasions; when the monitoring occasion of the LP-WUS is within an active period of Cell DTX and within an active time of C-DRX, the UE monitors the LP-WUS at at least one of the monitoring occasions; when the monitoring occasion of the LP-WUS is within an inactive period of Cell DTX and within the active time of C-DRX, the UE does not monitor the LP-WUS at at least one of the monitoring occasions; and/or when the monitoring occasion of the LP-WUS is within an inactive period of Cell DTX and within an inactive time of C-DRX, the UE does not monitor the LP-WUS at at least one of the monitoring occasions. In an embodiment, the C-DRX mechanism and the Cell DTX mechanism operate concurrently, and the UE determines whether to monitor the LP-WUS based on whether the monitoring occasion of the LP-WUS is within an active time of Cell DTX.

When C-DRX and Cell DTX operate concurrently, the UE can be in at least one of the following four periods: period A, period B, period C, and period D, as shown in FIG. 12. Within the four periods above, the states of C-DRX and Cell DTX and the behavior of the UE are as shown in Table 2.

**Table 2**

| Period | Cell DTX | C-DRX | UE Behavior |
|---|---|---|---|
| A | Active period | Active time | Monitor LP-WUS |
| B | Inactive period | Active time | Do not monitor LP-WUS |
| C | Inactive period | Inactive time | Do not monitor LP-WUS |
| D | Active period | Inactive time | Monitor LP-WUS |

Referring to Table 2 and FIG. 12, the step of determining the monitoring behavior for the LP-WUS according to the C-DRX parameters, the Cell DTX parameters, and the monitoring occasion of the LP-WUS includes: in period A, that is, when the monitoring occasion of the LP-WUS is within an active period of Cell DTX and within an active time of C-DRX, monitoring the LP-WUS at the monitoring occasion; in period B, that is, when the monitoring occasion is within an inactive period of Cell DTX and within the active time of C-DRX, not monitoring the LP-WUS at the monitoring occasion; in period C, that is, when the monitoring occasion is within an inactive period of Cell DTX and within an inactive time of C-DRX, not monitoring the LP-WUS at the monitoring occasion; and in period D, that is, when the monitoring occasion is within an active period of Cell DTX and within an inactive time of C-DRX, monitoring the LP-WUS at the monitoring occasion. FIG. 12 schematically illustrates the periods of Cell DTX and C-DRX and their relationship with the LP-WUS monitoring occasion, but the embodiments of the present application are not limited thereto. In addition, the present disclosure provides some embodiments of the communication method performed by the UE. As described above, a person skilled in the art can derive the corresponding communication method performed by the base station based on the above embodiments. Based on the embodiments of the present application, signals transmitted by the base station in the inactive period of Cell DTX can be reduced, and the power consumption of the base station can be saved. The UE can also reduce signal reception, which can save the power consumption of the UE. Meanwhile, by ensuring that the behavior on the UE side and the behavior on the base station side are consistent, normal communication between the base station and the UE is ensured.

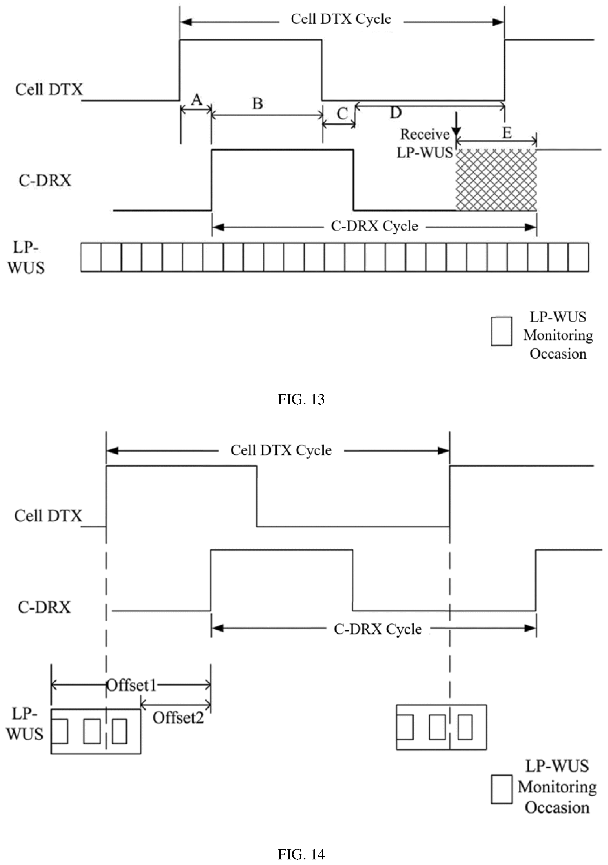

In an embodiment, when the C-DRX mechanism and the Cell DTX mechanism operate concurrently, the communication method according to an embodiment of the present application further includes: receiving the LP-WUS, where the LP-WUS is also used for adjusting an active time of C-DRX. For example, the LP-WUS indicates to the UE to start an on-duration timer of C-DRX (for example, drx-onDurationTimer) in advance. As another example, the LP-WUS indicates to the UE to increase an active time of C-DRX. As shown in FIG. 13, the communication method according to an embodiment of the present application further includes: receiving the LP-WUS; and according to the LP-WUS, adjusting a time period E to be an active time of C-DRX. Specifically, the start point of the on-duration timer of C-DRX (for example, drx-onDurationTimer) can be advanced, or a period of time after the LP-WUS can be adjusted to be an active time of C-DRX. The Cell DTX cycle, the C-DRX cycle, and their relationship with the monitoring occasion of the LP-WUS schematically shown in FIG. 13 are illustrative, but the embodiments of the present application are not limited thereto. In FIG. 13, the time position for receiving the LP-WUS and the time period E are merely illustrative. Actually, there is a time interval between the time position for receiving the LP-WUS and the start time position of the time period E, and the embodiments of the present application impose no limitation in this regard.

In an embodiment, determining the monitoring behavior for the LP-WUS according to the C-DRX parameters, the Cell DTX parameters, and the monitoring occasion of the LP-WUS includes: the UE monitors the LP-WUS within an inactive period of Cell DTX. In an embodiment, referring to FIG. 13, the UE monitors the LP-WUS during period A, period B, period C, and period D. Correspondingly, the base station can transmit the LP-WUS within the inactive period of Cell DTX. Therefore, the UE and the base station determine the monitoring behavior for the LP-WUS according to the C-DRX parameters, the Cell DTX parameters, and the monitoring occasion of the LP-WUS, so that a consistent understanding between the base station and the UE can be ensured, thereby enabling normal communication between the base station and the UE.

In an embodiment, the C-DRX mechanism and the Cell DTX mechanism operate concurrently, and the UE determines whether to monitor the LP-WUS based on whether the monitoring occasion of the LP-WUS is in an active time of C-DRX. In an embodiment, when the monitoring occasion of the LP-WUS is within an active period of Cell DTX and within an inactive time of C-DRX, the UE does not monitor the LP-WUS at at least one of the monitoring occasions; when the monitoring occasion of the LP-WUS is within an active period of Cell DTX and within an active time of C-DRX, the UE monitors the LP-WUS at at least one of the monitoring occasions; when the monitoring occasion of the LP-WUS is within an inactive period of Cell DTX and within the active time of C-DRX, the UE monitors the LP-WUS at at least one of the monitoring occasions; and/or when the monitoring occasion of the LP-WUS is within an inactive period of Cell DTX and within an inactive time of C-DRX, the UE does not monitor the LP-WUS at at least one of the monitoring occasions. The UE can also reduce signal reception, which can save the power consumption of the UE. Meanwhile, by ensuring that the behavior on the UE side and the behavior on the base station side are consistent, normal communication between the base station and the UE is ensured. In an embodiment, the UE monitors the LP-WUS within the inactive time of C-DRX. Based on this, a consistent understanding between the base station and the UE is ensured, thereby enabling normal communication between the base station and the UE.

In an embodiment, the UE monitors the LP-WUS before an on-duration timer (drx-onDurationTimer), as shown in FIG. 14, which can be understood as the UE periodically monitoring the LP-WUS. In this case, the communication method according to an embodiment of the present application further includes: before determining the monitoring behavior for the LP-WUS according to the C-DRX parameters, the Cell DTX parameters, and the monitoring occasion of the LP-WUS, obtaining a first offset Offset1 and/or a second offset Offset2; and determining a monitoring period of the LP-WUS based on the first offset Offset1 and/or the second offset Offset2, where the first offset Offset1 is used for indicating an offset of a start point of the monitoring period relative to a start point of the on-duration timer of C-DRX, and the second offset Offset2 is used for indicating an offset of an end time of the monitoring period relative to the start point of the on-duration timer of C-DRX. In an embodiment, the first offset Offset1 is transmitted by the base station to the UE, and the second offset Offset2 is transmitted by the base station to the UE or is reported by the UE to the base station. FIG. 14 schematically illustrates the relationship between the Cell DTX period, the C-DRX period, and the LP-WUS monitoring period, as well as the number of monitoring occasions within the monitoring period, but the embodiments of the present application are not limited thereto.

For example, after the step of obtaining the first offset Offset1 and/or the second offset Offset2, the step of determining the monitoring behavior for the LP-WUS according to the C-DRX parameters, the Cell DTX parameters, and the monitoring occasion of the LP-WUS includes: monitoring the LP-WUS at monitoring occasions within the monitoring period, regardless of whether the monitoring occasion of the LP-WUS is located in an active period or an inactive period of Cell DTX. In an exemplary embodiment, as shown in FIG. 14, within the monitoring period of the LP-WUS, although some LP-WUS monitoring occasions are located in the active period of Cell DTX and some LP-WUS monitoring occasions are located in the inactive period of Cell DTX, the UE monitors the LP-WUS at all LP-WUS monitoring occasions within the monitoring period of the LP-WUS. The number of monitoring occasions included in each monitoring period in the embodiments of the present application is not limited thereto, and may be one, two, or four or more.

For example, after the step of obtaining the first offset Offset1 and/or the second offset Offset2, the step of determining the monitoring behavior of the LP-WUS according to the C-DRX parameters, the Cell DTX parameters, and the monitoring occasion of the LP-WUS includes: monitoring the LP-WUS at monitoring occasions that are within the monitoring period and within an active period of the Cell DTX. In an exemplary embodiment, as shown in FIG. 14, within each monitoring period of the LP-WUS, some LP-WUS monitoring occasions are in the active period of Cell DTX, and some LP-WUS monitoring occasions are in the inactive period of Cell DTX. The UE does not monitor the LP-WUS at the monitoring occasions in the inactive period of Cell DTX, and the UE monitors the LP-WUS at the monitoring occasions in the active period of Cell DTX. The number of monitoring occasions included in each monitoring period in the embodiments of the present application is not limited to this, and may be one, two, or four or more.

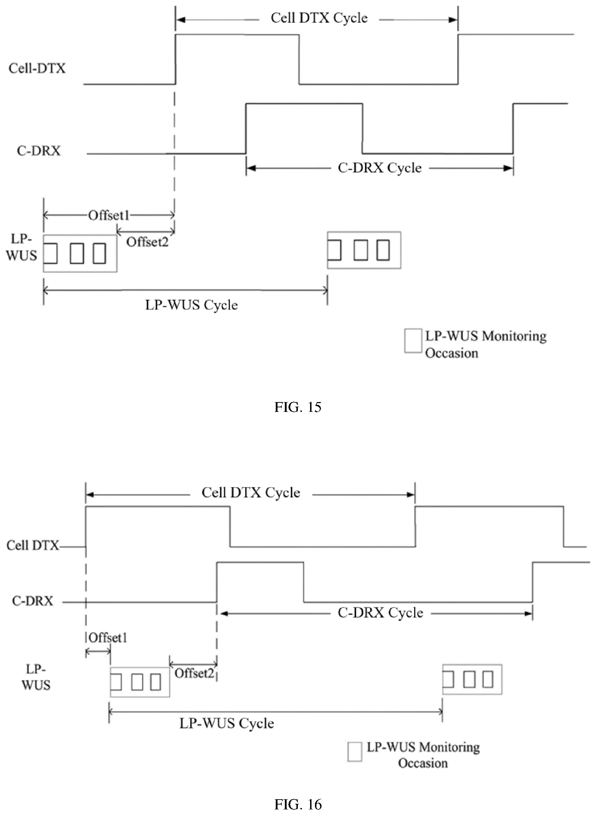

In an embodiment, the UE monitors the LP-WUS at a time before the active period of Cell DTX, as shown in FIG. 15, which can be understood as the UE periodically monitoring the LP-WUS. In this case, the communication method according to an embodiment of the present application further includes: before determining the monitoring behavior for the LP-WUS according to the C-DRX parameters, the Cell DTX parameters, and the monitoring occasion of the LP-WUS, obtaining a first offset Offset1 and/or a second offset Offset2; and the UE determines a monitoring period of the LP-WUS based on the first offset Offset1 and/or the second offset Offset2, where the first offset Offset1 is used for indicating an offset of a start point of the monitoring period relative to a start point of an activation time timer of the Cell DTX, and the second offset Offset2 is used for indicating an offset of an end time of the monitoring period relative to the start point of the activation time timer of the Cell DTX. In an embodiment, the first offset Offset1 is transmitted by the base station to the UE, and the second offset Offset2 is transmitted by the base station to the UE or is reported to the base station by the UE.

In addition, the communication method according to an embodiment of the present application further includes: receiving the LP-WUS, where the LP-WUS is also used for adjusting a next active time of the C-DRX. In an embodiment, the communication method according to an embodiment of the present application further includes: receiving the LP-WUS; and according to the LP-WUS, starting an on-duration timer of the C-DRX (for example, drx-onDurationTimer) in advance or increasing an active time of the C-DRX. For example, the start point of the on-duration timer of the C-DRX (for example, drx-onDurationTimer) is advanced or the active time of the C-DRX is increased before the next active time.

In an embodiment, the UE monitors the LP-WUS within the active period of Cell DTX, as shown in FIG. 16, which can be understood as the UE periodically monitoring the LP-WUS. In this case, the communication method according to an embodiment of the present application further includes: before determining the monitoring behavior for the LP-WUS according to the C-DRX parameters, the Cell DTX parameters, and the monitoring occasion of the LP-WUS, obtaining a first offset Offset1 and/or a second offset Offset2; and the UE determines a monitoring period of the LP-WUS based on the first offset Offset1 and/or the second offset Offset2, where the first offset Offset1 is used for indicating an offset of a start point of the monitoring period relative to a start point of an activation time timer of the Cell DTX, and the second offset Offset2 is used for indicating an offset of an end time of the monitoring period relative to a start point of an on-duration timer of the C-DRX. In an embodiment, the first offset Offset1 is transmitted by the base station to the UE, and the second offset Offset2 is transmitted by the base station to the UE or is reported to the base station by the UE. In an embodiment, the value of Offset1 can be 0.

In the foregoing embodiments, the second offset Offset2 may be related to UE capability. Specifically, the UE can report the second offset Offset2 to the base station through UE capability signaling.

In the foregoing embodiments of the present application, the UE receives first information, where the first information includes Cell DTX parameters and/or C-DRX parameters, and LP-WUS parameters; the UE determines a monitoring occasion of the LP-WUS according to the LP-WUS parameters; and the UE determines a monitoring behavior for the LP-WUS according to the Cell DTX parameters and/or the C-DRX parameters, and the monitoring occasion of the LP-WUS, to ensure that the base station and the UE have a consistent understanding, thereby enabling normal communication between the base station and the UE.

The communication method provided in the foregoing embodiments of the present application can ensure that the base station and the UE have a consistent understanding, thereby enabling normal communication between the base station and the UE. However, the foregoing communication method may have a problem of frequent switching of the UE between MR and LR.

Specifically, after the monitoring behavior for the LP-WUS is determined, the LP-WUS can be activated or deactivated by a timer. That is, the timer can be used to activate the LP-WUS monitoring or to deactivate the LP-WUS monitoring. The UE starts the timer upon a conditional trigger. For activating and deactivating the LP-WUS monitoring, the trigger conditions of the timer can be the same or different. The present disclosure does not limit the trigger condition of the timer.

In one case, when a condition is met (for example, when the UE receives a Downlink Control Information (DCI) for scheduling data), the UE will start or restart a timer for activating LP-WUS monitoring. If there is no data scheduling while the timer is running, the UE will continue to run the timer. When the timer expires, the UE will start monitoring the LP-WUS (which can also be understood as the UE returning to LR) and stop monitoring the PDCCH (which can also be understood as the UE turning off MR). However, even if there is data to be transmitted in an inactive time of C-DRX and/or an inactive period of Cell DTX, since the base station will not transmit data scheduling during the inactive period, the UE will not receive a DCI, so the timer may expire, causing the UE to turn off MR. In this case, if the base station wants to schedule data to the UE in the next active time of C-DRX and/or active period of Cell DTX, the base station needs to transmit information again to instruct the UE to return to MR (or instruct the UE to resume PDCCH monitoring). This will cause the UE to switch frequently between MR and LR, which will introduce additional data transmission latency.

In another case, for a UE at a cell edge, the coverage of the base station may be poor, causing the UE to be unable to receive the LP-WUS for a long time. To ensure the robustness of the system, the UE needs to return to MR to perform normal monitoring of the PDCCH. For this purpose, a timer for deactivating LP-WUS monitoring is introduced. For example, when a condition is met (for example, the UE receives an LP-WUS), a timer for deactivating LP-WUS monitoring is started or restarted. In this case, while the timer is running, the UE can also transmit a feedback message to the base station. The feedback message is used to confirm to the base station that the UE has received the LP-WUS. After that, the base station and the UE will continue to communicate according to the indication information of the LP-WUS. In one case, if the UE does not receive the LP-WUS, the UE will not transmit a feedback message. Correspondingly, since the base station does not receive the feedback message, it can determine that the UE has not received the LP-WUS, and the base station can transmit the LP-WUS again at the next LP-WUS monitoring occasion. If the UE does not receive the LP-WUS while the timer is running, then after the timer expires, the UE resumes PDCCH monitoring (which can also be understood as the UE turning on MR) and stops monitoring the LP-WUS (which can also be understood as the UE turning off LR). However, in an inactive time of C-DRX and/or an inactive period of Cell DTX, the base station will not transmit the LP-WUS, and the UE will not receive the LP-WUS. The timer may expire, causing the UE to turn off LR (stop monitoring the LP-WUS) and turn on MR (resume PDCCH monitoring), leading to unnecessary power consumption.

For this reason, an embodiment of the present application also provides a communication method, which includes step S100, step S200, and step S300.

Step S100, the UE receives first information, wherein the first information includes Cell DTX parameters and/or C-DRX parameters, and the first information also includes a length of one or more first timers. Correspondingly, the base station transmits the first information.

In an embodiment, the Cell DTX parameters and the C-DRX parameters can be carried by RRC signaling. In an embodiment, the Cell DTX parameters and the C-DRX parameters can be carried by the same RRC signaling or by different RRC signaling. For the signaling of the Cell DTX parameters and the C-DRX parameters, reference can be made to the foregoing embodiments.

The length of the first timer can be carried by RRC signaling. The Cell DTX parameters and/or the C-DRX parameters, and the length of the first timer can be carried by the same RRC signaling, or can be carried by different RRC signaling regardless of their order.

The length of the first timer can be carried by a SIB message. In one example, step S100 may include: the UE receives the length of the first timer carried by a SIB message; and the UE receives the Cell DTX parameters and/or the C-DRX parameters carried by RRC signaling.

The first timer is used to activate or deactivate LP-WUS.

The first information also includes a length of one or more first timers. A specific implementation may be: the first information can configure one or more values for the first timer; or, the first information configures one or more first timers, and when multiple first timers are configured, each first timer corresponds to a value, and these values can be different. The embodiments of the present application are not limited in this regard. The following embodiments use the former case as an example; the latter case is also applicable to the following embodiments and will not be described repeatedly.

Step S200, when a condition is met, the UE starts or restarts a first timer, where the first timer is used for activating or deactivating LP-WUS. Correspondingly, when the condition is met, the base station can also start or restart the first timer.

The embodiments of the present application do not impose a limitation on the condition for starting or restarting the first timer. For example, once the UE receives a DCI for scheduling data, the first timer is started or restarted.

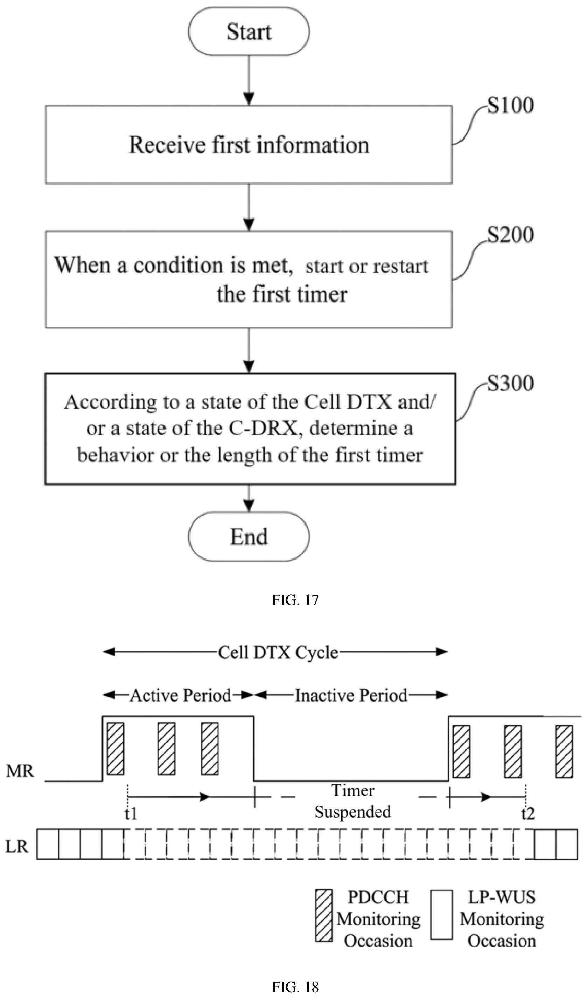

Step S300, according to a state of the Cell DTX and/or a state of the C-DRX, the UE determines a behavior or the length of the first timer. As shown in FIG. 17. Correspondingly, the base station can also determine the behavior or the length of the first timer.

The communication method described in FIG. 17 can be implemented alone, or can be implemented in combination with the communication method of the foregoing embodiments (including step S10, step S20, and step S30). The following description uses the separate implementation of the communication method shown in FIG. 17 as an example.

The communication method can be performed by a UE and/or a base station, or can also be performed by a chip in the UE and/or a chip in the base station. The communication method in FIG. 17 is performed by the UE in FIG. 1 above, and the base station can also perform a corresponding communication method. The communication method provided by the embodiments of the present application can be applied to a case where the Cell DTX mechanism, the C-DRX mechanism, or the Cell DTX mechanism and the C-DRX mechanism operate concurrently. The following will be described separately for these three cases.

The following describes a communication method for a timer used to activate LP-WUS.

In an embodiment, the communication method includes step S100, step S200, and step S300.

Step S100, the UE receives first information, wherein the first information includes Cell DTX parameters and/or C-DRX parameters, and the first information further includes a length of one or more first timers.

Step S200, when a condition is met, a first timer is started or restarted, where the first timer is used to activate LP-WUS.

Step S300, according to a state of the Cell DTX and/or a state of the C-DRX, a behavior or the length of the first timer is determined.

Based on this embodiment, by determining the behavior or length of the first timer, it is possible to avoid frequent switching of the UE between MR and LR, thereby preventing the additional data transmission latency caused by such frequent switching.

### I. Under the Cell DTX mechanism, the first timer is used to activate LP-WUS monitoring

In an embodiment, the communication method includes step S100, step S200, and step S300.

Step S100, the UE receives first information, where the first information includes Cell DTX parameters, and the first information further includes a length of one or more first timers.

Step S200, when a condition is met, the UE starts or restarts a first timer, where the first timer is used to activate LP-WUS.

Step S300, according to the state of the Cell DTX, the UE determines the behavior of the first timer.

By determining the behavior of the first timer according to the state of the Cell DTX (for example, suspending the first timer in an inactive period of the Cell DTX), it is possible to prevent the UE from turning off MR during the inactive period of the Cell DTX, thereby avoiding frequent switching between MR and LR, and thus reducing latency.

In an exemplary embodiment, step S300 may include: in an inactive period of the Cell DTX, suspending the running of the first timer. In an exemplary embodiment, step S300 may further include: after suspending the running of the first timer, in a next active period of the Cell DTX, resuming the running of the first timer or restarting the first timer. In this embodiment, in step S100, the first information may include a length of one first timer.

In an exemplary embodiment, as shown in FIG. 18, when a condition is met, the UE starts a first timer (at time t1 in the figure). During the running of the first timer, the UE enters an inactive period of Cell DTX (i.e., the activation time timer of Cell DTX expires). During the inactive period of Cell DTX, the first timer is suspended until the inactive period of Cell DTX ends (i.e., the activation time timer for the next Cell DTX cycle starts running). When the activation time timer for the next Cell DTX cycle starts running, the UE resumes running the first timer until the first timer expires (at time t2 in the figure). After the first timer expires, the UE monitors a LP-WUS, and the UE may also stop monitoring a PDCCH. Therefore, this embodiment avoids the UE turning off the MR during the inactive period of Cell DTX, thereby preventing frequent switching of the UE between the MR and a LR, and thus reducing latency.

In another embodiment, the first information includes multiple lengths for the first timer, where the lengths of the first timer include a first value and a second value. The first value and the second value are different. Based on different conditions, the UE uses different values as the current length of the first timer. For example, when Cell DTX is enabled, the first value is used as the length of the first timer, and when Cell DTX is disabled, the second value is used as the length of the first timer. The first value is greater than the second value. The first value and the second value may be in units such as seconds, milliseconds, frames, subframes, or slots, to which the embodiments of this application are not limited.

In an exemplary embodiment, the length of the first timer is extended when Cell DTX is enabled, relative to the length of the first timer when Cell DTX is disabled. For example, when Cell DTX is enabled, a first value is used as the length of the first timer; when Cell DTX is disabled, an extended first value is used as the length of the first timer, i.e., the length of the first timer equals the first value plus an increment.

Through this embodiment, under the Cell DTX mechanism, a longer first timer is used to avoid the UE turning off the MR during the inactive period of Cell DTX, which can reduce frequent switching between the MR and the LR.

It should be noted that there may be a time interval between the expiration time of the first timer and the time when the UE starts monitoring the LP-WUS, which is not limited by the present disclosure.

### II. The first timer is used to activate the LP-WUS under a Connected mode Discontinuous Reception (C-DRX) mechanism.

In an embodiment, the communication method includes step S100, step S200, and step S300.

Step S100, the UE receives first information, where the first information includes C-DRX parameters, and the first information further includes a length of one or more first timers.

Step S200, when a condition is met, the UE starts or restarts a first timer, where the first timer is used to activate the LP-WUS.

Step S300, the UE determines a behavior of the first timer according to a state of the C-DRX.

By determining the behavior of the first timer according to the state of the C-DRX (for example, the first timer is suspended during an inactive time of C-DRX), it is possible to avoid the UE turning off the MR during the inactive time of C-DRX, thereby avoiding frequent switching between the MR and the LR and thus reducing latency.

In an exemplary embodiment, step S300 may include: suspending the running of the first timer during an inactive period of C-DRX. In an exemplary embodiment, step S300 may further include: after suspending the running of the first timer, resuming or restarting the first timer in the next active time of C-DRX. In this embodiment, in step S100, the first information may include one length for the first timer.

In an exemplary embodiment, when a condition is met, the UE starts a first timer. During the running of the first timer, the UE enters an inactive time of C-DRX (i.e., the C-DRX on-duration timer, the C-DRX inactivity timer, the C-DRX downlink retransmission timer, and the C-DRX uplink retransmission timer all expire) or at least one of the C-DRX on-duration timer, the C-DRX inactivity timer, the C-DRX downlink retransmission timer, or the C-DRX uplink retransmission timer expires. During the inactive time of C-DRX, the first timer is suspended until the inactive time of C-DRX ends (e.g., the on-duration timer for the next cycle of C-DRX starts running). Alternatively, when at least one of the C-DRX on-duration timer, the C-DRX inactivity timer, the C-DRX downlink retransmission timer, or the C-DRX uplink retransmission timer expires, the first timer is suspended until the inactive time of C-DRX ends (e.g., the on-duration timer for the next cycle of C-DRX starts running). When the on-duration timer for the next C-DRX cycle starts running, the UE resumes running the first timer until the first timer expires. After the first timer expires, the UE monitors the LP-WUS, and the UE may stop monitoring the PDCCH. This embodiment avoids the UE turning off the MR during the inactive time of C-DRX, thereby preventing frequent switching of the UE between the MR and the LR, and thus reducing latency.

In another embodiment, the first information includes multiple lengths for the first timer, where the lengths of the first timer include a first value and a second value. The first value and the second value are different. Based on different conditions, the UE uses different values as the current length of the first timer. For example, when C-DRX is activated, the first value is used as the length of the first timer, and when C-DRX is deactivated, the second value is used as the length of the first timer. The first value is greater than the second value. The first value and the second value may be in units such as seconds, milliseconds, frames, subframes, or slots, to which the embodiments of this application are not limited.

In an exemplary embodiment, the length of the first timer is extended when C-DRX is activated, relative to the length of the first timer when C-DRX is deactivated. For example, when C-DRX is enabled, a first value is used as the length of the first timer; when C-DRX is disabled, an extended first value is used as the length of the first timer, i.e., the length of the first timer equals the first value plus an increment.

Through this embodiment, under the C-DRX mechanism, a longer first timer is used to avoid the UE turning off the MR during the inactive time of C-DRX, which can reduce frequent switching between the MR and the LR.

It should be noted that there may be a time interval between the expiration time of the first timer and the time when the UE starts monitoring the LP-WUS, which is not limited by the present disclosure.

### III. The first timer is used to activate the LP-WUS under the Cell DTX mechanism and the C-DRX mechanism.

In an embodiment, the communication method includes step S100, step S200, and step S300.

Step S100, the UE receives first information, where the first information includes Cell DTX parameters and C-DRX parameters, and the first information also includes a length of one or more first timers.

Step S200, when a condition is met, the UE starts or restarts a first timer, where the first timer is used to activate the LP-WUS.

Step S300, the UE determines a behavior of the first timer according to a state of the C-DRX and a state of the Cell DTX.

Based on this embodiment, frequent switching between the MR and the LR is avoided, thereby reducing latency.

In an exemplary embodiment, when C-DRX and Cell DTX operate concurrently, step S300 may include: suspending operation of a first timer during an inactive time of C-DRX or an inactive period of Cell DTX. In an exemplary embodiment, step S300 may include: after suspending operation of the first timer, resuming operation of the first timer or restarting the first timer during an active period of Cell DTX and an active time of C-DRX. In this embodiment, in step S100, the first information may include a length of a first timer.

In an exemplary embodiment, when a condition is met, the UE starts the first timer. While the first timer is running, the UE enters an inactive period of Cell DTX (i.e., an active time timer of Cell DTX expires) or an inactive time of C-DRX (i.e., a C-DRX on-duration timer, a C-DRX inactivity timer, a C-DRX downlink retransmission timer, and a C-DRX uplink retransmission timer all expire), or at least one of a C-DRX on-duration timer, a C-DRX inactivity timer, a C-DRX downlink retransmission timer, or a C-DRX uplink retransmission timer expires. During the inactive period of Cell DTX or the inactive time of C-DRX, the running of the first timer is suspended until the inactive period of Cell DTX or the inactive time of C-DRX ends (for example, the active time timer of the next Cell DTX cycle starts running or the on-duration timer of the next C-DRX cycle starts running). Alternatively, when at least one of an active time timer of Cell DTX, a C-DRX on-duration timer, a C-DRX inactivity timer, a C-DRX downlink retransmission timer, or a C-DRX uplink retransmission timer expires, the running of the first timer is suspended until the inactive period of Cell DTX or the inactive time of C-DRX ends. When the active time timer of the next Cell DTX cycle starts running or the on-duration timer of the next C-DRX cycle starts running, the UE resumes running the first timer until the first timer expires. After the first timer expires, the UE monitors the LP-WUS, and the UE may stop monitoring the PDCCH. This embodiment avoids the UE turning off the MR during the inactive period of Cell DTX, thereby preventing the UE from frequently switching between the MR and the LR, and thus reducing latency.

In another exemplary embodiment, the first information includes a plurality of lengths for the first timer, where the length of the first timer includes a first value and a second value. The first value and the second value are different. According to different conditions, the UE uses different values as the current length of the first timer. For example, when Cell DTX is enabled or C-DRX is enabled, the first value is used as the length of the first timer; when Cell DTX is disabled or C-DRX is disabled, the second value is used as the length of the first timer. The first value is greater than the second value. The first value and the second value may be in units such as seconds, milliseconds, frames, subframes, or slots; embodiments of the present application are not limited thereto.

In an exemplary embodiment, compared to the length of the first timer used when Cell DTX is enabled or C-DRX is enabled, the length of the first timer used when Cell DTX is disabled or C-DRX is enabled is extended. For example, when Cell DTX is enabled or C-DRX is enabled, a first value is used as the length of the first timer; when Cell DTX is disabled or C-DRX is disabled, the used length of the first timer is extended, i.e., the length of the first timer is the sum of the first value and an increment.

Through this embodiment, when C-DRX and Cell DTX operate concurrently, using a longer first timer can prevent the UE from turning off the MR during the inactive time of C-DRX, which can reduce frequent switching between the MR and the LR.

A communication method for a timer used to deactivate the LP-WUS is described below.

In an embodiment, the communication method includes step S100, step S200, and step S300.

Step S100: The UE receives first information. The first information includes Cell DTX parameters and/or C-DRX parameters, and the first information further includes a length of one or more first timers.

Step S200: When a condition is met, a first timer is started or restarted. The first timer is used to deactivate the LP-WUS.

Step S300: A behavior or length of the first timer is determined according to a state of Cell DTX and/or a state of C-DRX.

The method for determining the behavior or length of the first timer in this embodiment is the same as in the foregoing embodiments (regarding the communication method for the timer used to activate the LP-WUS), and a repeated description will not be given here. The communication method of this embodiment differs from the foregoing embodiments in that after the first timer expires, the UE monitors the PDCCH, and the UE may stop monitoring the LP-WUS.

This embodiment can avoid power consumption waste caused by the UE turning off the LR and turning on the MR due to the expiration of the first timer.

In a connected state, the LP-WUS is at least used for indicating a behavior of the UE for monitoring the PDCCH. In addition, the LP-WUS can also be used to carry other functions, for example, parameter adjustment of Cell DTX, activation/deactivation of Cell DTX, parameter adjustment of C-DRX, activating/deactivating a semi-persistently scheduled PDSCH, activating/deactivating a semi-persistently scheduled PUSCH, switching search space set groups, and the like. To support more functions, the LP-WUS needs a relatively large number of bits. Since a base station can also be configured by the UE with multiple semi-persistently scheduled PDSCH resources and/or multiple semi-persistently scheduled PUSCH resources, if the LP-WUS can indicate activation/deactivation of the semi-persistently scheduled PDSCH, or indicate activation/deactivation of the semi-persistently scheduled PUSCH, then the LP-WUS needs more bits. However, considering the detection performance of the LP-WUS, the code rate of the LP-WUS is usually low, and the number of bits it can carry is limited.

In view of this, an embodiment of the present application further provides a communication method. The communication method includes step S1000 and step S2000.

Step S1000: A UE receives first information. The first information includes LP-WUS parameters, and the LP-WUS parameters include a time-domain position and/or a frequency-domain position of the LP-WUS.

Correspondingly, a base station may also transmit the first information.

Step S2000, a UE receives the LP-WUS according to the LP-WUS parameters. The LP-WUS carries different functions by using one or more of a Time Division Multiplexing (TDM) mode, a Frequency Division Multiplexing (FDM) mode, and a Code Division Multiplexing (CDM) mode. The communication method may be performed by a UE (such as the UE in FIG. 1) and a base station (such as the base station in FIG. 1), or may be performed by a chip in the UE and a chip in the base station.

Correspondingly, a base station may transmit the LP-WUS according to the LP-WUS parameters.

In an embodiment of the present application, a UE receives the LP-WUS according to the LP-WUS parameters (for example, a time-domain position and/or a frequency-domain position of the LP-WUS). The LP-WUS carries different functions by using one or more of a TDM mode, an FDM mode, and a CDM mode, such that the LP-WUS with a limited number of bits can carry more functions.

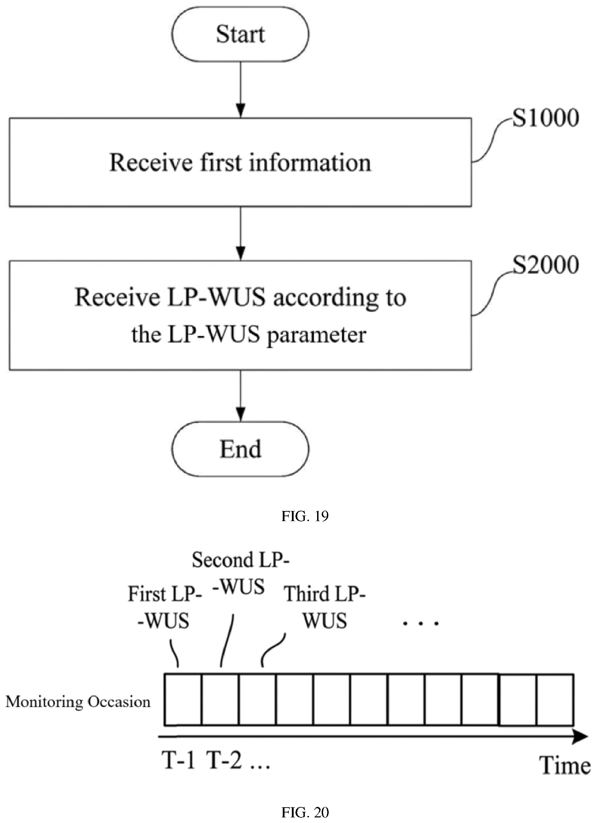

In an embodiment, the step of receiving the LP-WUS includes: distinguishing the functions carried by the LP-WUS according to different time-domain positions of a monitoring occasion of the LP-WUS, that is, the LP-WUS carries different functions by using the TDM mode. For example, the UE monitors the LP-WUS at an LP-WUS monitoring occasion at time T-1, and the LP-WUS received at time T-1 is used for carrying a first function (for example, indicating monitoring of a PDCCH). The UE monitors the LP-WUS at an LP-WUS monitoring occasion at time T-2, and the LP-WUS received at time T-2 is used for carrying a second function (for example, indicating activation or deactivation of a semi-persistently scheduled PDSCH), as shown in FIG. 20. In an exemplary embodiment, in step S1000, monitoring occasions of the LP-WUS for different functions may be configured. For example, different periods may be configured for the LP-WUS. The LP-WUS of a first period is used for carrying the first function, and the LP-WUS of a second period is used for carrying the second function. Embodiments of the present application are not limited thereto. The periods of the LP-WUSs carrying different functions may be three or more. In an exemplary embodiment, the UE may determine the function of the LP-WUS according to different monitoring occasions.

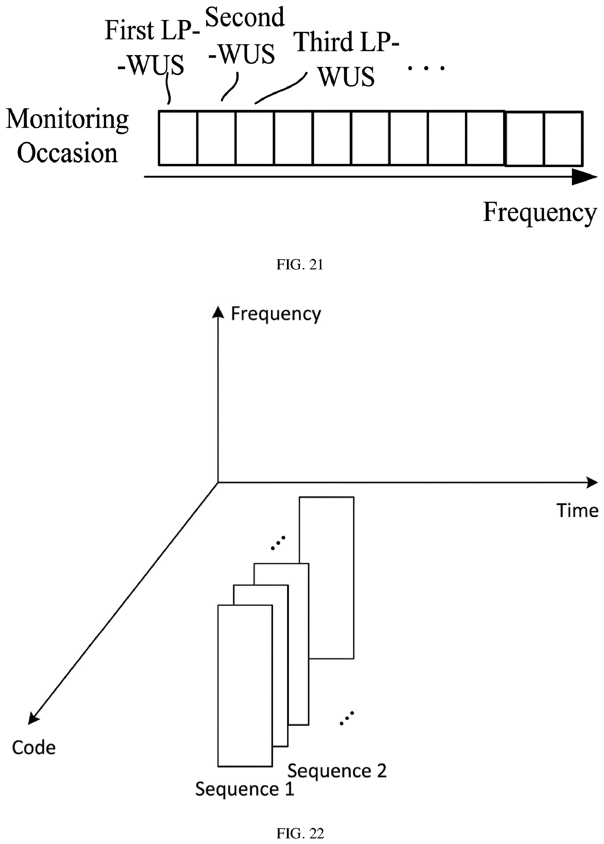

In an embodiment, the step of receiving the LP-WUS includes: distinguishing the functions carried by the LP-WUS according to a frequency-domain position of a monitoring occasion of the LP-WUS, that is, the LP-WUS carries different functions by using the FDM mode. For example, a base station configures a plurality of frequency positions for the LP-WUS, and the UE also monitors the LP-WUS at the plurality of frequency-domain positions (for example, monitoring a first LP-WUS, a second LP-WUS, and a third LP-WUS for different functions), as shown in FIG. 21. In an exemplary embodiment, the base station may configure the UE to monitor the LP-WUS on different frequency domains at different times, to make it easier for the UE to implement the above method.

In an embodiment, the step of receiving the LP-WUS includes: distinguishing the functions carried by the LP-WUS according to a sequence of the LP-WUS, that is, the LP-WUS carries different functions by using the CDM mode. In an exemplary embodiment, if the monitored LP-WUS is sequence 1, it indicates that the LP-WUS is used for carrying a first function (for example, indicating monitoring of a PDCCH), and if the monitored LP-WUS is sequence 2, it indicates that the LP-WUS is used for carrying a second function (for example, indicating activation or deactivation of a semi-persistently scheduled PDSCH), as shown in FIG. 22. Embodiments of the present application are not limited thereto. The sequences of the monitored LP-WUSs carrying different functions may be three or more.

In an embodiment, a UE may also use a combination of two or three of the TDM mode, the FDM mode, and the CDM mode to distinguish different functions of the LP-WUS.

Unless explicitly stated otherwise, the above embodiments/examples may be combined with any one or more other embodiments/examples.

An embodiment of the present application also provides a user equipment, which includes a processor and a memory. The memory is configured to store a computer program, and the processor is configured to execute the computer program stored in the memory to perform the method described in the foregoing embodiments.

An embodiment of the present application also provides a base station, which includes a processor and a memory. The memory is configured to store a computer program, and the processor is configured to execute the computer program stored in the memory to perform the method described in the foregoing embodiments.

An embodiment of the present application also provides a chip, which includes a processor configured to execute a computer program from a memory to cause a device in which the chip is installed to perform the method described in the foregoing embodiments.

An embodiment of the present application also provides a non-transitory computer-readable storage medium, which is configured to store a computer program that causes a computer to perform the method described in the foregoing embodiments.

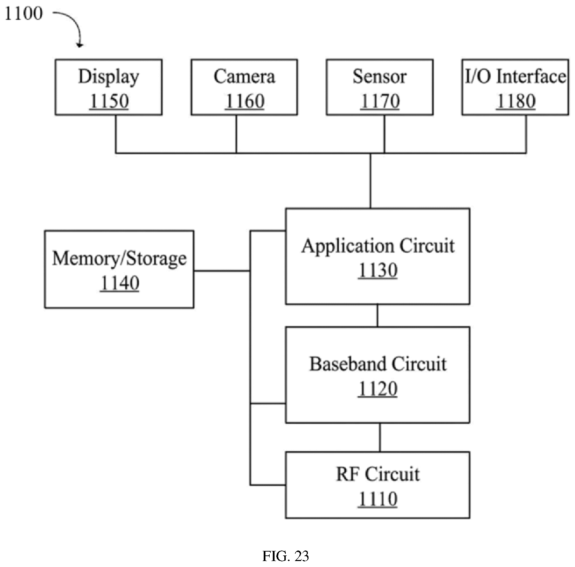

FIG. 23 is a block diagram of an exemplary system 1100 for wireless communication according to an embodiment of the present application. Embodiments of the present application may be implemented into the system using any appropriately configured hardware and/or software. FIG. 23 shows a system 1100, which at least includes a radio frequency (RF) circuit 1110, a baseband circuit 1120, an application circuit 1130, a memory/storage 1140, a display 1150, a camera 1160, a sensor 1170, and an input/output (I/O) interface 1180, which are coupled to each other. The application circuit 1130 may include circuits such as, but not limited to, one or more single-core or multi-core processors. The processor may include any combination of general-purpose processors and special-purpose processors, for example, a graphics processor or an application processor. The processor may be coupled to the memory/storage device and configured to execute instructions stored in the memory/storage device to enable various applications and/or operating systems to run on the system. In various embodiments, the communication method according to the embodiments of the present application may be embodied in whole or in part in one or more of the RF circuit, the baseband circuit, and/or the application circuit.

The principles and implementations of the present application have been described herein with reference to specific examples. The foregoing description of the embodiments is only for the purpose of helping to understand the method of the present application and its core ideas. Meanwhile, for a person skilled in the art, modifications can be made to the specific implementations and application scope based on the ideas of the present application. In summary, the content of this specification should not be construed as a limitation on the present application.

## Claims

1. A communication method, performed by a user equipment comprising a first receiver and a second receiver, the method comprising:
receiving first information, wherein the first information comprises a first parameter of Cell Discontinuous Transmission (Cell DTX) and a second parameter of Low-Power Wake-Up Signal (LP-WUS), and the first parameter comprises a Cell DTX cycle;
determining a monitoring occasion of the LP-WUS according to the second parameter; and
determining a monitoring behavior for the LP-WUS according to the first parameter and the monitoring occasion,
wherein the LP-WUS is at least used for indicating a behavior of monitoring a Physical Downlink Control Channel (PDCCH), and the first information is received via the first receiver.

2. The communication method according to claim 1, wherein the step of determining the monitoring behavior for the LP-WUS according to the first parameter and the monitoring occasion comprises:
when the monitoring occasion is within an inactive period of the Cell DTX, not monitoring the LP-WUS at the monitoring occasion.

3. The communication method according to claim 2, wherein the second parameter comprises a monitoring period of the LP-WUS, and
wherein at least one of monitoring occasions within the monitoring period is comprised in an active period of the Cell DTX.

4. The communication method according to claim 1, wherein the step of determining the monitoring behavior for the LP-WUS according to the first parameter and the monitoring occasion comprises:
when the monitoring occasion is within an inactive period of the Cell DTX, monitoring the LP-WUS at the monitoring occasion.

5. The communication method according to claim 4, wherein the communication method further comprises:
obtaining a first offset and/or a second offset; and
determining a monitoring period of the LP-WUS based on the first offset and/or the second offset,
wherein the first offset is used for indicating an offset of a start point of the monitoring period relative to a start point of an activation time timer of the Cell DTX, and the second offset is used for indicating an offset of an end time of the monitoring period relative to the start point of the activation time timer of the Cell DTX.

6. The communication method according to claim 5, wherein the first offset is comprised in the first information, and the second offset is comprised in the first information or is reported by the user equipment to a base station.

7. The communication method according to claim 1, wherein the first information further comprises a Connected mode Discontinuous Reception (C-DRX) parameter, the C-DRX parameter comprises a C-DRX cycle, and
the step of determining the monitoring behavior for the LP-WUS according to the first parameter and the monitoring occasion comprises:
when the monitoring occasion is in an active period of the Cell DTX and is in an active time of the C-DRX, monitoring the LP-WUS at the monitoring occasion;
when the monitoring occasion is in an inactive period of the Cell DTX and is in an active time of the C-DRX, not monitoring the LP-WUS at the monitoring occasion;
when the monitoring occasion is in an inactive period of the Cell DTX and is in an inactive time of the C-DRX, not monitoring the LP-WUS at the monitoring occasion; or
when the monitoring occasion is in an active period of the Cell DTX and is in an inactive time of the C-DRX, monitoring the LP-WUS at the monitoring occasion.

8. The communication method according to claim 1, wherein the first information further comprises a Connected mode Discontinuous Reception (C-DRX) parameter, the C-DRX parameter comprises a length of an on-duration timer of the C-DRX, and the step of determining the monitoring behavior for the LP-WUS according to the first parameter and the monitoring occasion comprises:
determining the monitoring behavior for the LP-WUS according to the first parameter, the C-DRX parameter, and the monitoring occasion.

9. The communication method according to claim 8, wherein the communication method further comprises:
obtaining a first offset and/or a second offset; and
determining a monitoring period of the LP-WUS based on the first offset and/or the second offset,
wherein the first offset is used for indicating an offset of a start point of the monitoring period relative to a start point of the on-duration timer of the C-DRX; and the second offset is used for indicating an offset of an end time of the monitoring period relative to the start point of the on-duration timer of the C-DRX.

10. The communication method according to claim 9, wherein:
the LP-WUS is monitored at a monitoring occasion within the monitoring period; or
the LP-WUS is monitored at a monitoring occasion within the monitoring period and located in an active period of the Cell DTX.

11. The communication method according to claim 8, wherein the first parameter further comprises a length of an activation time timer of the Cell DTX, and
the communication method further comprises:
obtaining a first offset and/or a second offset; and
determining a monitoring period of the LP-WUS based on the first offset and/or the second offset,
wherein the first offset is used for indicating an offset of a start point of the monitoring period relative to a start point of the activation time timer of the Cell DTX; and the second offset is used for indicating an offset of an end time of the monitoring period relative to the start point of the activation time timer of the Cell DTX.

12. The communication method according to claim 7 or 11, wherein the communication method further comprises:
receiving the LP-WUS via the second receiver, wherein the LP-WUS is further used for adjusting an active time of the C-DRX.

13. The communication method according to claim 12, wherein the communication method further comprises:
according to the LP-WUS, starting the on-duration timer of the C-DRX in advance or increasing an active time of the C-DRX.

14. The communication method according to claim 8, wherein the first parameter further comprises a length of an activation time timer of the Cell DTX, and
the communication method further comprises:
obtaining a first offset and/or a second offset; and
determining a monitoring period of the LP-WUS based on the first offset and/or the second offset,
wherein the first offset is used for indicating an offset of a start point of the monitoring period relative to a start point of the activation time timer of the Cell DTX; and the second offset is used for indicating an offset of an end time of the monitoring period relative to a start point of the on-duration timer of the C-DRX.

15. The communication method according to any one of claims 8, 11, and 14, wherein the first offset is comprised in the first information, and the second offset is comprised in the first information or is reported by the user equipment to a base station.

16. A communication method, performed by a user equipment, the method comprising:
receiving first information, wherein the first information comprises a first parameter of Cell Discontinuous Transmission (Cell DTX) and/or a Connected mode Discontinuous Reception (C-DRX) parameter, and the first information further comprises a length of one or more first timers;
when a condition is met, starting or restarting a first timer, wherein the first timer is used for activating or deactivating Low-Power Wake-Up Signal (LP-WUS); and
determining a behavior or the length of the first timer according to a state of the Cell DTX and/or a state of the C-DRX.

17. The communication method according to claim 16, wherein the step of determining the behavior or the length of the first timer according to the state of the Cell DTX and/or the state of the C-DRX comprises:
in an inactive period of the Cell DTX, suspending running of the first timer.

18. The communication method according to claim 16 or 17, wherein the step of determining the behavior or the length of the first timer according to the state of the Cell DTX and/or the state of the C-DRX comprises:
in an inactive time of the C-DRX, suspending running of the first timer.

19. The communication method according to claim 17 or 18, wherein the communication method further comprises:
after suspending the running of the first timer,
in an active period of the Cell DTX, resuming running of the first timer;
in an active time of the C-DRX, resuming running of the first timer; or
in an active period of the Cell DTX and during an active time of the C-DRX, resuming running of the first timer.

20. The communication method according to claim 16, wherein the length of the first timer comprises a first value and a second value, the first value and the second value being different, and
the step of determining the behavior or the length of the first timer according to the state of the Cell DTX and/or the state of the C-DRX comprises:
when the Cell DTX is enabled, using the first value as the length of the first timer, and when the Cell DTX is disabled, using the second value as the length of the first timer.

21. The communication method according to claim 20, wherein the first value is greater than the second value.

22. A communication method, performed by a user equipment, the communication method comprising:
receiving first information, wherein the first information comprises a Low-Power Wake-Up Signal (LP-WUS) parameter, and the LP-WUS parameter comprises a time-domain position and/or a frequency-domain position of the LP-WUS; and
receiving the LP-WUS according to the LP-WUS parameter, wherein the LP-WUS carries different functions using one or more of a Time Division Multiplexing (TDM) mode, a Frequency Division Multiplexing (FDM) mode, and a Code Division Multiplexing (CDM) mode.

23. The communication method according to claim 22, wherein the step of receiving the LP-WUS comprises:
in the TDM mode, distinguishing functions carried by the LP-WUS according to a time-domain position of a monitoring occasion of the LP-WUS.

24. The communication method according to claim 22, wherein the step of receiving the LP-WUS comprises:
in the FDM mode, distinguishing functions carried by the LP-WUS according to a frequency-domain position of a monitoring occasion of the LP-WUS.

25. The communication method according to claim 22, wherein the step of receiving the LP-WUS comprises:
in the CDM mode, distinguishing functions carried by the LP-WUS according to a sequence of a monitored LP-WUS.

26. A communication method, performed by a base station, the method comprising:
transmitting first information, wherein the first information comprises a first parameter of Cell Discontinuous Transmission (Cell DTX) and a second parameter of Low-Power Wake-Up Signal (LP-WUS), the first parameter comprises a Cell DTX cycle, and the second parameter is used for determining a monitoring occasion of the LP-WUS; and
determining a monitoring behavior of a user equipment for the LP-WUS according to the first parameter and the monitoring occasion of the LP-WUS,
wherein the LP-WUS is at least used for indicating a behavior of the user equipment for monitoring a Physical Downlink Control Channel (PDCCH).

27. The communication method according to claim 26, wherein the step of determining the monitoring behavior of the user equipment for the LP-WUS according to the first parameter and the monitoring occasion of the LP-WUS comprises:
within an inactive period of the Cell DTX, not transmitting the LP-WUS.

28. The communication method according to claim 27, wherein at least one monitoring occasion within the monitoring period is comprised in an active period of the Cell DTX.

29. The communication method according to claim 26, wherein the step of determining the monitoring behavior of the user equipment for the LP-WUS according to the first parameter and the monitoring occasion of the LP-WUS comprises:
transmitting a LP-WUS at a monitoring occasion within an inactive period of the Cell DTX.

30. The communication method according to claim 29, wherein the communication method further comprises:
transmitting a first offset; and/or
transmitting a second offset or receiving the second offset reported by the user equipment; and
determining a monitoring period of the LP-WUS based on the first offset and/or the second offset,
wherein the first offset is used for indicating an offset of a start point of the monitoring period relative to a start point of an activation time timer of the Cell DTX, and the second offset is used for indicating an offset of an end time of the monitoring period relative to the start point of the activation time timer of the Cell DTX.

31. The communication method according to claim 26, wherein the first information further comprises a Connected mode Discontinuous Reception (C-DRX) parameter, the C-DRX parameter comprises a C-DRX cycle, and
the step of determining the monitoring behavior of the user equipment for the LP-WUS according to the first parameter and the monitoring occasion of the LP-WUS comprises:
transmitting a LP-WUS at a monitoring occasion within an active period of the Cell DTX and within an active time of the C-DRX;
not transmitting a LP-WUS at a monitoring occasion within an inactive period of the Cell DTX and within an active time of the C-DRX;
not transmitting a LP-WUS at a monitoring occasion within an inactive period of the Cell DTX and within an inactive time of the C-DRX; or
transmitting a LP-WUS at a monitoring occasion within an active period of the Cell DTX and within an inactive time of the C-DRX.

32. The communication method according to claim 26, wherein the first information further comprises a Connected mode Discontinuous Reception (C-DRX) parameter, the C-DRX parameter comprises a length of an on-duration timer of the C-DRX, and the step of determining the monitoring behavior for the LP-WUS according to the first parameter and the monitoring occasion comprises:
determining the monitoring behavior for the LP-WUS according to the first parameter, the parameter of the C-DRX, and the monitoring occasion.

33. The communication method according to claim 32, wherein the communication method further comprises:
transmitting a first offset; and/or transmitting a second offset or receiving a second offset reported by the user equipment; and
determining a monitoring period of the LP-WUS based on the first offset and/or the second offset,
wherein the first offset is used for indicating an offset of a start point of the monitoring period relative to a start point of an on-duration timer of the C-DRX; and the second offset is used for indicating an offset of an end time of the monitoring period relative to the start point of the on-duration timer of the C-DRX.

34. The communication method according to claim 33, wherein:
the LP-WUS is transmitted at monitoring occasions within the monitoring period; or
the LP-WUS is transmitted at monitoring occasions within the monitoring period and located in an active period of the Cell DTX.

35. The communication method according to claim 32, wherein the first parameter further comprises a length of an activation time timer of the Cell DTX, and
the communication method further comprises:
transmitting a first offset; and/or transmitting a second offset or receiving the second offset reported by the user equipment, wherein a monitoring period of the LP-WUS is determined based on the first offset and/or the second offset,
wherein the first offset is used for indicating an offset of a start point of the monitoring period relative to a start point of the activation time timer of the Cell DTX; and the second offset is used for indicating an offset of an end time of the monitoring period relative to the start point of the activation time timer of the Cell DTX.

36. The communication method according to claim 31 or 35, wherein the communication method further comprises:
transmitting the LP-WUS, wherein the LP-WUS is further used to indicated to the user equipment to adjust an active time of the C-DRX.

37. The communication method according to claim 36, wherein the LP-WUS is used for indicating to start an on-duration timer of the C-DRX in advance or to increase an active time of the C-DRX.

38. The communication method according to claim 32, wherein the first parameter further comprises a length of an activation time timer of the Cell DTX,
the communication method further comprises:
transmitting a first offset; and/or transmitting a second offset or receiving a second offset reported by the user equipment; and
determining a monitoring period of a LP-WUS based on the first offset and/or the second offset,
wherein the first offset is used for indicating an offset of a start point of the monitoring period relative to a start point of the activation time timer of the Cell DTX; and the second offset is used for indicating an offset of an end time of the monitoring period relative to a start point of an on-duration timer of the C-DRX.

39. A communication method, performed by a base station, the method comprising:
transmitting first information, wherein the first information comprises a first parameter of Cell Discontinuous Transmission (Cell DTX) and/or a Connected mode Discontinuous Reception (C-DRX) parameter, and the first information further comprises a length of one or more first timers;
when a condition is met, starting or restarting the first timer, wherein the first timer is used for activating or deactivating Low-Power Wake-Up Signal (LP-WUS); and
determining a behavior or length of the first timer based on a state of the Cell DTX and/or a state of the C-DRX.

40. The communication method according to claim 39, wherein,
the step of determining the behavior or the length of the first timer based on the state of the Cell DTX and/or the state of the C-DRX comprises:
in an inactive period of the Cell DTX, suspending the first timer.

41. The communication method according to claim 39 or 40, wherein,
the step of determining the behavior or the length of the first timer based on the state of the Cell DTX and/or the state of the C-DRX further comprises:
in an inactive time of the C-DRX, suspending the first timer.

42. The communication method according to claim 40 or 41, wherein the communication method further comprises:
after suspending the first timer,
in an active period of the Cell DTX, resuming the first timer;
in an active time of the C-DRX, resuming the first timer; or
in the active period of the Cell DTX and during an active time of the C-DRX, resuming the first timer.

43. The communication method according to claim 39, wherein the length of the first timer comprises a first value and a second value, and the first value and the second value are different, and
the step of determining the behavior or the length of the first timer based on the state of the Cell DTX and/or the state of the C-DRX comprises:
using the first value as the length of the first timer when the Cell DTX is enabled, and using the second value as the length of the first timer when the Cell DTX is disabled.

44. The communication method according to claim 43, wherein the first value is greater than the second value.

45. A communication method, performed by a base station, the communication method comprising:
transmitting first information, wherein the first information comprises a Low-Power Wake-Up Signal (LP-WUS) parameter, and the LP-WUS parameter comprises a time-domain position and/or a frequency-domain position of a monitoring occasion of the LP-WUS; and
transmitting the LP-WUS, wherein the LP-WUS carries different functions using one or more of Time Division Multiplexing (TDM), Frequency Division Multiplexing (FDM), and Code Division Multiplexing (CDM).

46. The communication method according to claim 45, wherein the step of transmitting the LP-WUS comprises:
in TDM, distinguishing the functions carried by the LP-WUS based on a time-domain position of the monitoring occasion of the LP-WUS.

47. The communication method according to claim 45, wherein the step of transmitting the LP-WUS comprises:
in FDM, distinguishing the functions carried by the LP-WUS based on a frequency-domain position of the monitoring occasion of the LP-WUS.

48. The communication method according to claim 45, wherein the step of transmitting the LP-WUS comprises:
in CDM, distinguishing the functions carried by the LP-WUS based on a sequence of the LP-WUS.

49. A user equipment, comprising: a processor and a memory, wherein the memory is configured to store a computer program, and the processor is configured to invoke and run the computer program stored in the memory to perform the method according to any one of claims 1 to 15.

50. A user equipment, comprising: a processor and a memory, wherein the memory is configured to store a computer program, and the processor is configured to invoke and run the computer program stored in the memory to perform the method according to any one of claims 16 to 21.

51. A user equipment, comprising: a processor and a memory, wherein the memory is configured to store a computer program, and the processor is configured to invoke and run the computer program stored in the memory to perform the method according to any one of claims 22 to 25.

52. A base station, comprising: a processor and a memory, wherein the memory is configured to store a computer program, and the processor is configured to invoke and run the computer program stored in the memory to perform the method according to any one of claims 26 to 38.

53. A base station, comprising: a processor and a memory, wherein the memory is configured to store a computer program, and the processor is configured to invoke and run the computer program stored in the memory to perform the method according to any one of claims 39 to 44.

54. A base station, comprising: a processor and a memory, wherein the memory is configured to store a computer program, and the processor is configured to invoke and run the computer program stored in the memory to perform the method according to any one of claims 45 to 48.

55. A chip, comprising: a processor, configured to invoke and run a computer program from a memory to cause a device comprising the chip to perform the method according to any one of claims 1 to 15.

56. A chip, comprising: a processor, configured to invoke and run a computer program from a memory to cause a device comprising the chip to perform the method according to any one of claims 16 to 21.

57. A chip, comprising: a processor, configured to invoke and run a computer program from a memory to cause a device comprising the chip to perform the method according to any one of claims 22 to 25.

58. A chip, comprising: a processor, configured to invoke and run a computer program from a memory to cause a device comprising the chip to perform the method according to any one of claims 26 to 38.

59. A chip, comprising: a processor, configured to invoke and run a computer program from a memory to cause a device comprising the chip to perform the method according to any one of claims 39 to 44.

60. A chip, comprising: a processor, configured to invoke and run a computer program from a memory to cause a device comprising the chip to perform the method according to any one of claims 45 to 48.

61. A non-transitory computer-readable storage medium storing a computer program that, when executed by a computer, causes the computer to perform the method according to any one of claims 1 to 15.

62. A non-transitory computer-readable storage medium storing a computer program that, when executed by a computer, causes the computer to perform the method according to any one of claims 16 to 21.

63. A non-transitory computer-readable storage medium storing a computer program that, when executed by a computer, causes the computer to perform the method according to any one of claims 22 to 25.

64. A non-transitory computer-readable storage medium storing a computer program that, when executed by a computer, causes the computer to perform the method according to any one of claims 26 to 38.

65. A non-transitory computer-readable storage medium storing a computer program that, when executed by a computer, causes the computer to perform the method according to any one of claims 39 to 44.

66. A non-transitory computer-readable storage medium storing a computer program that, when executed by a computer, causes the computer to perform the method according to any one of claims 45 to 48.

67. A computer program product, comprising computer program code that, when run on a computer, causes the computer to perform the method according to any one of claims 1 to 15.

68. A computer program product, comprising computer program code that, when run on a computer, causes the computer to perform the method according to any one of claims 16 to 21.

69. A computer program product, comprising computer program code that, when run on a computer, causes the computer to perform the method according to any one of claims 22 to 25.

70. A computer program product, comprising computer program code that, when run on a computer, causes the computer to perform the method according to any one of claims 26 to 38.

71. A computer program product, comprising computer program code that, when run on a computer, causes the computer to perform the method according to any one of claims 39 to 44.

72. A computer program product, comprising computer program code that, when run on a computer, causes the computer to perform the method according to any one of claims 45 to 48.
